(19) **Europäisches Patentamt / European Patent Office / Office européen des brevets**

(11) **EP 3 118 974 A2**

(12) **EUROPEAN PATENT APPLICATION**
published in accordance with Art. 153(4) EPC

(43) Date of publication:
**18.01.2017 Bulletin 2017/03**

(51) Int Cl.:
***H02K 3/28*** (2006.01)

(21) Application number: **15762095.6**

(22) Date of filing: **12.03.2015**

(86) International application number:
**PCT/KZ2015/000004**

(87) International publication number:
**WO 2015/137790 (17.09.2015 Gazette 2015/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.03.2014 KZ 20140325**

(71) Applicant: **Sapargaliyev, Aldan Asanovich Almaty 050058 (KZ)**

(72) Inventor: **Sapargaliyev, Aldan Asanovich Almaty 050058 (KZ)**

(74) Representative: **Hertin und Partner Rechts- und Patentanwälte PartG mbB Kurfürstendamm 54/55 10707 Berlin (DE)**

(54) **MULTIPLE-VECTOR INDUCTIVE COUPLING AND ELECTRIC MACHINE**

(57)     The present invention relates to electric machines (EM), such as electric motors and electric generators, which convert electrical energy into mechanical energy and mechanical energy into electricity respectively, including linear motion EMs, curvilinear motion EMs and rotary (turning) motion EMs. More particularly, the present invention relates to an EM induction method and device, said induction system comprising two main magnetic coupling subsystems, for example a subsystem comprising permanent magnets and a subsystem comprising electromagnets. Thus, EM induction system comprises at least one special feature chosen from the group consisting of the following kinds (a) - (c):

(a) it is configured as a multiple-vector (MV) system and it is configured such as to provide multiple-vector coupling;

(b) at least one of the permanent magnets is selected from the group consisting **of: a closed-laminated permanent magnet; and a II-shaped anti-symmetric group of permanent magnets.**

(c) the induction system is vertically configured of multiple rows and comprises, in a vertical direction, two or more electromagnetic induction blocks.

Fig. 85

**Description**

The present invention relates to electric machines (EM), such as electric motors (electro-motors - converting electrical energy into mechanical energy) and electric generators (electro-generators - converting mechanical energy into electricity), including linear EMs, and rotary Ems, using for the production linear power and torque (disk) of the electromotive power, respectively.

More specifically, the present invention relates to a system of inductive-interacting blocks (SIB) apparatus and operating method in the EM, which comprises two or more parts of subsystems of inductive-interacting blocks (SSIB) movable relative to each other. EMs are so widespread that in any kinds of household and industrial machinery there is one or more EM. In some applications, the electric machine may be operated exclusively as an electric motor, while in other applications the electric machine can operate solely as a generator. EM can selectively operate (dual mode electric machine) either as a motor or a generator.

Depending on the amount of parts moving relative to each other (subsystems of inductive-interacting blocks SSIB), EM may have two or more supports for these SIB parts moving relatively from each other. One of the supports is primary and others are secondary. For example, primary support for the rotary EM is the central support shaft, and for the linear machine - it is supporting platform. For example, in the case when two SIB parts move in the opposite directions or independently, and the third part is fixed relative to them, then three supports are need for three SIB parts. In the fields of use of EM, where the following requirements stand in the foreground (the main ones are) - small size and high efficiency (efficiency coefficient), the EMs with source-off subsystem (EMSSOEB) are used, containing SSIB with source-off block (OEB), wherein one of the SSIB is configured in the form of electromagnetic subsystem (SSAMB), while others are configured in the form of source-off subsystem (SSOEB), including permanent magnets.

Currently known are EMSSOEBs with SIB, which contains one of the fractions of single-vector electromagnet *ABO :* basic fraction, closed fraction and z - integrated fraction.

The most widespread is the EM to with the source-off subsystem EMSSOEB of the rotary movement type (REMSSOEB) with rotary type SIB comprising the basic fraction single-vector electromagnet of the vertical scanning (*h* -scanning) of the upper side attachment (Ob *h* -REMSSOEB). To demonstrate some of their specific functional features the following patents should be noted - US 8508094 B2, US 8368273, US 8013489 B2, US 8310126 B1, and EP 2466725 A1. In US 8508094 B2 offered is Ob *h*-REMSSOEB with a high concentration of magnetic streams from the rotary permanent magnet. Herewith also suggested are the solutions to compromise optimization problems between the maximum value of torque and the minimum value of its rotor mechanical inertia, on which the OEB is placed. In US 8368273 suggested are ways to minimize Ob *h* -REMSSOEB torque pulsations, based on the selections of air gaps positions between the poles of the permanent magnets OEB, which is placed on the rotor. Thus on the rotor, in its axial direction, several rows of permanent magnets can be placed. In US 8013489 B2, unlike in US 8508094 B2 and US 8368273, the AMB is placed on the torque rotor shaft, which enables to minimize the sizes of low-power electro-motors. In US 8310126 B1: for the production of AMB electromagnets it is suggested to use powdered metal rods; it is suggested to regulate the AMB temperature based on the circulation of the cooling liquid through the tube; it is discussed the advantages of the sinusoidal controllers compared with the Hall sensors, while detecting the positions of the permanent OEB magnets with respect to the AMB parts. The detection of the position of the permanent magnets is necessary for the management of AMB electric power in order to vary the OEB movement speeds with respect to the **AMB**. In EP 2466725 A1 it is proposed to equip the OEB with projections for detecting the position of the permanent OEB magnets with respect to AMB parts.

In order to increase the efficiency coefficient and output power at small sizes of REMSSOEB the interest appears towards the possibilities of creating and using the REMSSOEB with closed fraction SIB (OI-REMSSOEB).

OI-REMSSOEB is divided into two types: vertical scanning **(OI** *h* -REMSSOEB), often referred to as Dual-rotor motor, for example, US 7898134 B1, US 20080088200 A1; and horizontal scanning (OI *λ* -REMSSOEB), often referred to as pancake-type motor/generator, for example, US 20060244320 A1, US 8242661 B2, US 20130147291 A1.

In US 7898134 B1 proposed is the electro-motor OI *h* -REMSSOEB, in which: the electromagnet core is made of a thin multilayer magnet-soft material; all inductively inhomogeneous environment of the external and internal circle rotors (SSOEB) are configured in the form of individual permanent magnets; winding is made of thick-walled copper; SSOEB is attached to the central support shaft via C-shaped intermediate platform.

In US 20080088200 A1 proposed is the multi-serial (MS - multiserial) electric-generator MS OI *h* -REMSSOEB, comprising several closed fractions, on the basis of which individual electro-generators are made (configured as a plurality of EM, located along the axial direction), which are components of MS OI *h* -REMSSOEB.

In US 20060244320 A1 proposed are the options of electro-motor MS OI λ - REMSSOEB, which electromagnets SSAMB are configured with flat spiral shaped coreless windings.

In US 8242661 B2 proposed are the MS OI λ-REMSSOEB with different options of geometry of the permanent magnets and their relative position in SSOEB.

In US 20130147291 A1 proposed are construction options of MS OI λ-REMSSOEB and its methods of assembling as a whole. In particular it is suggested: to execute the shoes of electromagnets' cores to be removable; to pack SSAMB in reinforced plastic, while providing channels of SSAMB cooling in reinforced plastic.

In US 20130057091 A1 proposed is the electro-motor comprising a rotary type SIB, z - integrated fraction of vertical scanning.

In practice, also used are linear EMSSOEB with a closed SIB fraction of horizontal scanning (OI $\lambda$ -LEMSSOEB) rectilinear or curvilinear motion, on which some information is available, for example, in US 20130249324, A1, US 8587163 B2 and US 8593019 B2.

In US 20130249324 A1 proposed is OI $\lambda$ -LEMSSOEB with linear motion SIB, in which the geometry of non-magnetic SSOEB cogs are optimized to obtain high efficiency coefficient. In US 8587163 B2 proposed is OI $\lambda$-LEMSSOEB with reciprocating type SIB, in which the SIB is transfixed by one directing rod.

Known are a number of inventions, for example, US 20090009010 A1, US 8593019 B2, US 8624446, and US 20130076159 A1, which suggest various EMSSOEB options with SIB fraction, which can be used in the induction system of any of the types of rectilinear, curvilinear and rotational EMSSOEB movement.

In US 20090009010 A1 proposed is the EMSSOEB with a closed SIB fraction, comprising two-way multi-directional pair-flow (double-flow) electromagnet windings at different locations of the permanent magnets on the cogs of SSAMB or SSOEB.

In US 8593019 B2, US 8624446, and US 20130076159 A1 proposed are EMSSOEB with various options of SIB faction: basic fraction, a fraction of a closed, z - integrated fraction two basic fractions with combined (attached) OEBs in the middle of the SIB.

In US 8593019 B2 proposed is EMSSOEB, in which adjacent electromagnets have electrical difference in phase of 180° and at different locations of the permanent magnets on the SSAMB cogs or SSOEB. This paper also discussed the linear LEMSSOEB of the curvilinear motion with the hinges between the AMO.

In US 8624446 proposed is the EMSSOEB with blocks SSAMB with ternary winding ensembles of electromagnets, in which the adjacent ensembles of electromagnets have the electrical difference in phase of 60°.

In US 20130076159 A1 proposed is the EMSSOEB with SSAMB blocks with different kinds of winding ensembles of electromagnets. Herewith, one block of SSAMB may consist of several parts.

We have given a brief overview of the inventions to show the level of development of the EM, design features of EM components and introduce the terms suitable for a general review and analysis of various types of EM components and EM as a whole. In known EM inventions, numerous and narrowly specific terms are used.

From this invention review coincides a number of general conclusions for all kinds of known EM.

First, in all known EMs for SSAMB used are single-vector straight-tube (mainly quadrangular shape) electromagnet windings, which at close proximity on both sides (input and output) of the tube provides a single-vector electric field voltage vector.

Second, for the efficient use of input power (to increase efficiency coefficient) and to reduce EM size in its SSOEB or in SSOEB and SSAMB it is advisable to use a system of permanent magnets, which creates a strong magnetic field. The creation of a strong magnetic field using permanent magnets depends on the magnetic power of each magnet, their position relative to each other, and on the external conditions. Some solutions to these problems are described, for example, in patents US 8512590 B2, US 8400038 B2, EP 1829188 A1 and US 20130313923 A1. In US 8512590 B2 proposed is a process for producing a sintered ferrite-magnet. In US 8400038 B2 suggested are ways to focus the magnetic field in order to minimize the magnetic field dissipation. In EP 1829188 A1 proposed are options of mutual arrangement of permanent magnets in SSOEB, in particular in the form of sandwiches, in order to protect them from the demagnetization and strengthening of the magnetic field. In US 20130313923 A1 it is proposed to perform substrates of permanent magnets in SSOEB from the materials of increased thermal conductivity and preventing its strong overheating, which can cause reduction of the efficiency coefficient, as well as demagnetization of the permanent magnets.

The main object of the present invention is to provide a method and EM ensuring effective use of SIB volume, in order to increase the power density (output power ratio to the dimensions of EM) for different EMs. The invention further provides an increase in the efficiency coefficient value. Herewith the proposed options of method of inductive coupling in SIB cover all types of EMs.

The claimed method and the EM satisfy the invention criteria as on the date of filing the application no similar solutions were found. The method and the EM have a number of significant differences from the known methods and devices for their implementation. The proposed method and the EM can be implemented on the basis of existing equipment using reclaimed industrial materials, components and technologies.

The proposed method is implemented by increasing the surface area of the inductive coupling per unit of volume at the decrease in proportion of inefficient part of the winding and the use of strong permanent magnets of a new type.

The main difference between the proposed method and a known method is that SSIB performs inductive interaction between each other on the basis of at least one feature selected from the group (a) - (c):

(a) SIB performs multiple-vector inductive interaction on the basis of the use of at least one electromagnet, selected from the group consisting of the following: combination of at least two single-vector windings, which are configured with a core or without a core; symmetric or anti-symmetric multiple-vector winding, which are configured with a core or without a core;

(b) performs inductive interaction on the basis of the use of at least one kind of permanent magnets selected from the group consisting of the following kinds: closed-layered $P_G$-type permanent magnet; symmetric or anti-symmetric multiple-vector permanent magnet;

(c) provides inductive interaction on the basis of the use of vertically multi-row SIB, which contains vertically more than one AMB.

Other differences between the proposed method and known methods lies in the following:

- the inductive interaction is performed in it, wherein the sum of the forces acting perpendicular to the direction of movement of the moving part of SIB, particularly, of rotary EM hub, is zero.
- the optimization of curvilinear surface inductive interaction is performed in it.

To implement the main task of the present invention the electric machine (EM) is proposed, which comprises an outer body, a system of supports for different parts of the EM and system of inductive-interacting blocks (SIB), where the SIB is composed of at least two moving subsystems of inductive-interacting blocks (SSIB), each of which includes one or more induction blocks with internal structure, wherein at least one SSIB is electromagnetic subsystem of inductive-interacting blocks (SSAMB),comprising at least one electromagnetic induction block (AMB), the magnet system of which requires the use of alternating electromagnetic field.

The main difference of the proposed magnetic system is that it has at least one feature selected from the group (a) - (c):

(a) its SIB is configured as multiple-vector and allowing multiple-vector inductive interaction between the SSIB and includes at least one electromagnet selected from the group consisting of the following: combination of some single-vector windings, which is configured with a core or without a core; symmetric or anti-symmetric multiple-vector winding, which is configured with a core or without a core;

(b) comprises at least one kind of permanent magnets selected from the group: closed-layered $P_G$-type permanent magnet; symmetric or anti-symmetric multiple-vector permanent magnet;

(c) its SIB is configured vertically multi-row and on a vertical includes more than one AMB.

Other differences of proposed VCSD from the known VCSD lies in the following:

- it is configured in one of its kinds:
- linear EM with translational type SIB or reciprocating type SIB;
- curvilinear EM with translational type SIB or reciprocating type SIB;
- rotational EM with SIB selected from the group: of horizontal scanning; vertical scanning; mixed scanning;
- it is configured curvilinear with translational type SIB or reciprocating type SIB, in which the moving part of SIB is configured with a hinge between its components and with possibility of moving in a curved shape, wherein a curved shape is corresponding a curvilinear surface of the fixed part of SIB;
- it comprises at least one AMB, which vertically-centered lines on the sides of electromagnetic windings are located at an angle $\alpha$ with respect to its base line, where this angle is limited within the $0 < \alpha < \pi$ range;
- the view of its multiple-vector winding and multiple-vector magnet are selected from the group consisting of the following kinds of shapes: one-sided multiple-vector $\Gamma$-shaped; symmetric two-sided ($\Lambda$-shaped); anti-symmetric two-sided ($\Lambda$-shaped);
- in it the types of $\Lambda$-shaped winding and multiple-vector magnet types are selected from the group consisting of the following kinds: parallel two-sided with the straight upper side; parallel two-sided with the semi-ring upper side; divergent two-sided with the straight upper side; divergent two-sided with the sectoral-ring upper side; sector of the second-order curve;
- in it for any kind of $\Lambda$-shaped winding and multiple-vector magnet the ratio $0,02 \prec \dfrac{l2}{l1} \prec 2$ is performed, where introduced are the parameter designations of $\Lambda$-shaped form of curved winding and multiple-vector magnet: height $l1$ ; width $l2$ ; the distance between the lower transverse parts of the winding at its base $l3$ ;
- its multiple-vector electromagnet comprises a corresponding to multiple-vector armatures of the electromagnet, which belongs to the group of kinds of armatures: $\Gamma$-shaped; open symmetric $\Lambda$-shaped; closed symmetric $\Lambda$-shaped; open anti-symmetric $\Lambda$-shaped; closed anti-symmetric $\Lambda$-shaped;

- in it the types of Λ-shaped armatures are selected from the group consisting of the following kinds: parallel two-sided with the straight upper side; parallel two-sided with the semi-ring upper side; divergent two-sided with the straight upper side; divergent two-sided with the sectoral-ring upper side; forms of a second-order curve;
- in it Λ -shaped closed type electromagnet is configured with flat or curved shoes;
- in it Λ -shaped open type electromagnet, as part of an open-type electromagnetic block, comprises an outer inter-magnetic bridge-bus configured from the side ends of the electromagnets;
- in it Λ -shaped closed type electromagnet, as part of a closed type electromagnetic block, comprises an internal inter-magnetic bridge-bus;
- the SIB block structure includes at least one of the blocks' fractions: basic; closed; z-integrated; x-integrated;
- the location of blocks in the SIB is configured in the form selected from the group: single-row structure, vertically double-row structure, vertically multi-row structure;
- in it the SIB blocks scan is configured in the form selected from the group: vertical, horizontal and mixed;
- in it the SIB is configured single-row, wherein, SIB block structure is configured in the form selected from the group of block fractions: basic, closed and z-integrated, which are located in the form of blocks' scan: horizontal, vertical, mixed;
- in it the SIB is configured vertically double-row, comprising the source-off (OEB), wherein the SIB block structure is configured in the form of block fractions: basic, closed, z-integrated, x -integrated, which are located inside the EM in the form of: vertical blocks scan for the rows containing non-side OEBs; in any of the types of blocks scans for the rows, one of which consists of side OEBs;
- in it the SIB is configured vertically multi-row (three rows or more), wherein the SIB block structure is configured from the fractions selected of the following kinds: basic, closed, z-integrated, x -integrated, which are located in horizontal blocks scan in the EM for the rows not containing non-side OEBs or containing non-side OEBs only on one of the extreme rows;
- in it, at the vertical scan of SIB blocks, at least one of its SSIB is configured with the side attachment to the body, with a horizontal SIB blocks scan one of its SSIB is configured with an upper end attachment, at the displaced SIB blocks scan one of its SSIB is configured partially with an upper end and partially with a side attachment;
- in it the SIB blocks are located as vertical scan, for the rows containing side or non-side OEBs, wherein the connection region of blocks to each other are attached to the main support of the EM;
- in it the SSIBs configured separately from each other are attached to one or to several different side supports;
- the winding material of the electromagnet is configured in the form selected from the following group of kinds: wire-wise; plate-wise; print-wise;
- the electromagnet winding is configured in the form selected from the group consisting of the following kinds: collected, semi- collected and dispersed;
- the electromagnets of each block are configured in the form of a single ensemble or in the form several ensembles that are selected from the group: single, binary, ternary;
- the winding material of the electromagnet is configured of the wire/plate of a large section in order to minimize resistive losses;
- in the two-stream side winding socket, the currents' direction in both streams is configured in the form selected from the group: parallel, anti-parallel;
- each of the ensembles of electromagnets is secured to its single base (bridge/bus) of magnetic-soft material;
- in it the electromagnet is selected from the group, consisting of the following kinds: coreless with a flat winding (e. g. spiral-wise); coreless a bulk winding (e.g. self-supporting with quadrangular carcass framing); with a core of magnetic-soft material configured with a shoe or without a shoe; with a core of magnetic-soft material configured with one or more magnets on the shoe or on the cog; with a core of magnetic-soft material made of the magnet in the core kernel; with a core made of a permanent magnet;
- the shoe of the core is made of magnetic-soft material;
- the magnetic-soft material is performed selected from the group consisting of the following kinds: stamped and stowed large number of metal plates sheets; twisted metal plate; powdered magnetic-soft material (sintered ferromagnetic); composite material;
- the shoe of the core is configured in a form of partially or completely removable from the cap of the core;
- it is configured in the form of EMSSOEB with source-off subsystem, wherein at least one of SSIB is configured in the form of source-off subsystem (SSOEB), and includes induction-inhomogeneous environment selected from the group comprising the following kinds: periodic protrusions and recesses (multi-cogged) made of magnetic-soft material; with co-directional and anti-directional permanent magnets of a periodic location on the surface, partially in the pocket or completely in the pocket of magnetic-soft material with air recesses or without recesses between the magnets;
- it is configured with co-directional or anti-directional permanent magnets, wherein the OEB surface is configured in the form selected from a group: (a) periodically petal-shaped convex; (b) of a uniform height with periodic air recesses or without them; combination of (a) and (b);

- SSAMB or SSOEB is fixed, in particular is attached to a fixed support;
- in it the vertically-average lines of the sides of electromagnet windings to the direction of its relative movement with OEB forms an angle $\gamma$, which is limited within the $\pi < \gamma < 0$ range;
- it comprises at least one AMB, in which the vertically-average lines of the sides of electromagnet windings relative to its base line is located at an angle $\alpha$, that is limited within the $0 < \alpha < \pi$ range, wherein vertically-average lines of the sides of electromagnet to the direction of its relative movement with OEB makes an angle $\gamma$, which is selected from: $\alpha = \dfrac{\pi}{2}$ and $\alpha = \gamma$;

- in it vertically-average lines constituting the induction-inhomogeneous OEB environment to the direction of its relative movement with the AMB makes an angle $\alpha_\mu$, which is limited within the $0 < \alpha_\mu < \pi$ range;
- in it the lines constituting inductively inhomogeneous OEB environment are curvilinear;
- the same inhomogeneities, in particular protrusions, of the two OEBs, located on both sides of AMB are shifted by a half period;
- it is configured to allow the equality to zero of the sum of the components of the induction interaction forces acting perpendicular to the direction of motion of the moving SIB part, such as rotational EM hub;
- in it each electromagnet is performed separately and into the block they are assembled in a single or in a composed of several parts AMB frame, and they are mechanically attached to at least one form selected from the following group: mechanical hook of electromagnets with the frame; packaging using packaging material such as resin;
- in it the mechanical hook of electromagnets with the frame for the open electromagnet type is configured from its upper end face, for the closed electromagnet type is configured from its lower end face;
- it is performed allowing the possibility of optimization of curvilinear surface inductive interaction and one of the SSIB (first) nearby the other SSIB (second) border are attached at an intermediate platform or support;
- it is configured linear and in it the intermediate platform is connected to the main support formed as a support platform;
- it is configured rotational and in it the intermediate platform, through one or more hubs, including the hollow cylinder, is connected to the main support formed as a central support shaft;
- its SIB is configured with vertical scanning, wherein one of the SSIB (first) near the other SSIB (second) border is attached to the side support, in the form of one or two sides of the EM body;
- its SIB is configured with horizontal scanning, wherein one of the SSIB (first) near the other SSIB (second) border is attached to the side support, in a form of top end side EM body;
- it is configured in a form of a plurality of EM, located along the axial direction;
- it comprises at least two SSOEBs, formed to allow the possibility to move, particularly to rotate in one of the following ways: independently from each other; co-directionally; in opposite directions;
- its body comprises two separable from each other compartments - the compartment for the SIB and the compartment for the main support;
- in it the body compartments for SIB include: separable from each other the upper end part $C^M$ 11, and two sides $C^M$ 21 and $C^M$ 22 ;
- it is configured linear and its body compartment for the main support includes a substrate for the supporting platform $C^M$ 21;
- it is configured rotational and its body compartment for the main support includes two separable from each other $C^M$31 and $C^M$32 sides of the body for the SIB, with a central hole in one or two sides of the body for the SIB for the accommodation of the central support shaft;
- its induction part has at least one of the types of cooling system: ventilation-air, closed-flowing liquid, closed-evaporating liquid;

Referring now to the drawings, in which same elements, generally indicated only once with numerical references. The present invention may be implemented in many options, and only certain design options, facilitating a better understanding of the proposed technical solutions, will be described through examples, presented schematic drawings.

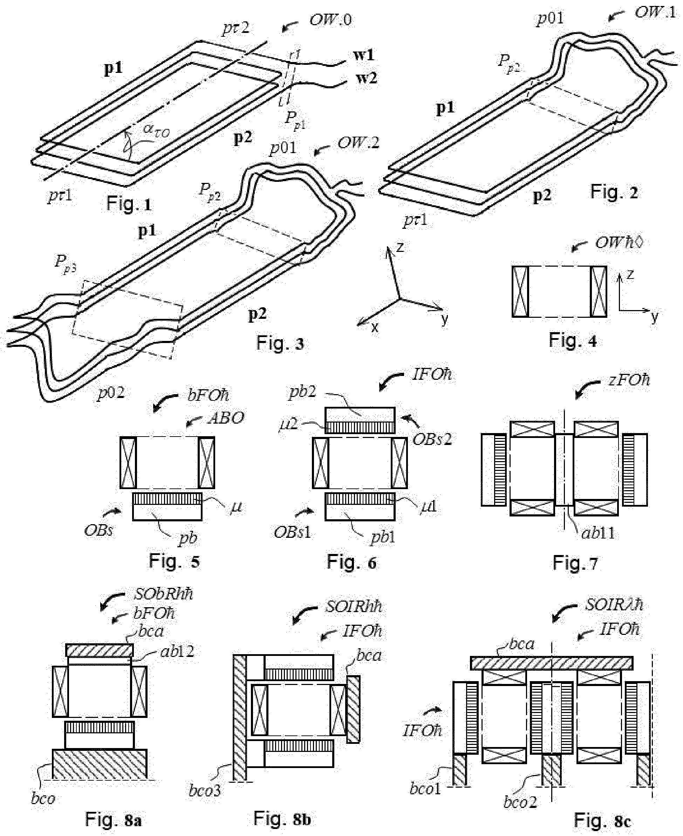

At the present time in the world practice used is one type of electromagnet winding - a single-vector winding $OW$ . Fig. 1-3 shows dimensional images of the well-known $OW$ types: concentrated $OW.0,$ semi-concentrated $OW.1$ and dispersed $OW.2$ with the incoming and outgoing parts of w1 w2 winding wiring. Herewith, Fig. 1-3 shows the border of the windings parts areas, involved and not involved in the creation of this winding are divided by planes $P_{pj}$, where j = 1, 2, 3. In all of these kinds of $OW$ in the creation of this winding, contribution is only given by the following straight winding areas:

- in the concentrated winding $OW.0$ the creation of this winding involves all four winding parts p1, p2, $p\tau$1 and $p\tau$2;
- in the semi-concentrated winding $OW.1$ the creation of this winding involves three winding parts - p1, p2 and $p\tau$1;

winding part p01 may be involved in the creation of other windings;

- in the dispersed *OW.2* winding the creation of this winding involves two winding parts - p1, p2; the **p01** and p02 winding parts may be involved in the development of other windings.

Two sides of the surface between the two lateral *p1, p2* parts of the winding form two sides of single-vector winding *OW*. The two sides of the single-vector winding *OW* by the side of its transverse parts *pτ1* and *pτ2* form two sides of the single-vector winding *OW* .

All known of the single-vector windings are configured so that the vertical center line is disposed at an angle $\alpha_{\tau O} = \dfrac{\pi}{2}$ to the bases (to the lines of its transverse parts) *pτ1* and *pτ2*. As it is known, in creating an electromotive power in EM involved are two lateral winding parts - *p1* and *p2*, which are called active winding parts. Transverse parts *pτ1* and *pτ2*, which are called inactive winding parts are not involved in the creation of an electromotive power in EM.

In the future, in relation to any winding the paper will adhere the reporting system of coordinates introduced in the Fig. 1-3 relative to the dimensional orientation of the geometry of the electromagnets windings: the xz-plane of the electromagnets, which is its vertical plane, will be called xz(A) -plane or $\hbar$ -plane; the zy-plane of the electromagnets, which is its upper plane, will be called zy(A) -plane or $\omega$-plane; the xy-plane of the electromagnets, which is its side plane, will be called the xy(A) -plane or $\lambda$ -plane. Herewith it is assumed that the main plane of the induction effect of electromagnet winding and the environment is a $\lambda$ -plane. The distance between the two lateral parts *p1* and *p2* of the winding is the width of the winding, and the distance between the two transverse parts *pτ1* and *pτ2* is the height of the winding.

Fig. 4 shows *OW* in an $\hbar$ -plane *OWℏ◊*.

Known are SIB blocks fractions created on the basis of *OW* , shown in Fig. 5-7: basic *bFOℏ*, closed *IFOℏ* and z-integrated *zFOℏ*.

Consider the possibilities for disposition/scanning of SIB blocks in EM. Herewith, the vertical EM plane is compatible with said $\hbar$ -plane (xz-plane of the electromagnets windings). Fig. 8a-8c shows known *OW* dispositions in EM: SIB of *SObRhℏ* type in EM, comprising basic *bFOℏ* fraction of vertical scanning of the upper AMB side attachment to the EM body; SIB in EM of *SOIRhℏ* type, comprising a closed faction *IFOℏ* of the vertical scanning of AMB side attachment EM to the EM body; group of individual SIBs in the EM of *SOIRhℏ* kind, each of which includes a closed *IFOℏ* fraction of the horizontal scanning of the upper side AMB attachment to the EM body (system comprising a plurality of EM, displaced along their common axial direction).

Known are types of SIB scanning, consisting of two basic fractions or z - integrated fraction (these are shown in the sources mentioned in the bibliography).

Fig. 5-8c also introduce the terms: side *OBs* , the first side *OBs1* and a second side *OBs2* of source-off blocks; induction-inhomogeneous environment $\mu$, the first induction-inhomogeneous environment $\mu1$, the second induction-inhomogeneous environment $\mu2$, respectively of, the side *OBs* , the first side *OBs1* and a second side *OBs2* of source-off blocks; bridge/bus *pb* , the first bridge/bus *pb1*, the second bridge/bus *pb2* of the magnetic field, respectively of, the side *OBs* , the first side *OBs1* and a second side *OBs2* of source-off blocks; the bridges/buses of magnetic fields *ab11* and *ab12*, respectively of, z - integrated fraction *zFOℏ* and an AMB in the EM of *SObRhℏ* kind; the intermediate platforms *bco, bco3, bco1, bco2* and for different *OBs* for SIB, respectively placed in EM of *SObRhℏ, SOIRhℏ* and *SOIRλℏ* kinds; the intermediate platform *bca* for attachment of AMB to the main support (supporting platform of linear EM or central supporting shaft of the rotary EM) or to the side support (for example, to the EM body); the intermediate platforms *bco , bco1* and *bco2* for the attachment, respectively of, the side *OBs* , the first side *OBs1* and a second side *OBs2* of source-off blocks to the main support or the side support.

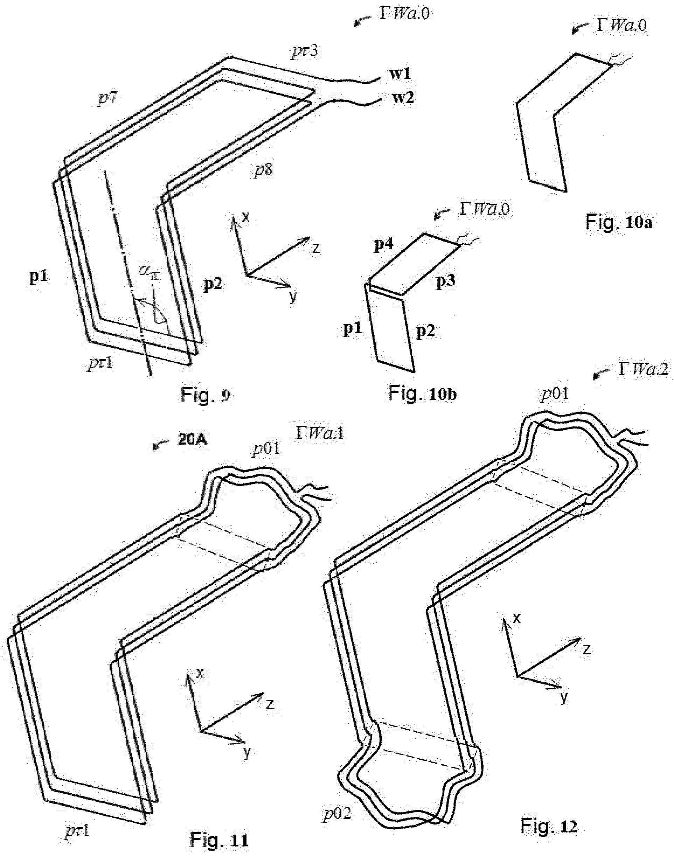

In order to create a high output power of the compact EM the present invention proposes multiple-vector windings for electromagnets. Multiple-vector windings provide the following opportunities: the curvilinear surface induction coupling; high voltage density field per unit volume, in comparison to known single-vector winding for electromagnets; reducing the volume of the winding material. Fig. 9-46 schematically illustrate some examples of performing the types and subtypes of the proposed multiple-vector windings - their formation, symbolic meanings, dimensional orientation in the reporting system of coordinates. Thus, in the Figures multiple-vector windings of electromagnets are configured so that the vertical center line is disposed at an angle $\dfrac{\pi}{2}$ (for example, designated are $\alpha_{\tau O} = \alpha_{\tau \Gamma} = \alpha_{\tau \Lambda a} = \alpha_{\tau \Lambda c} = \alpha_{\tau \Lambda e} = \dfrac{\pi}{2}$). In general, any of these angles can be limited within the "more than 0 less than $\pi$" range.

Fig. 9, 11 and 12 show dimensional images of a multiple-vector single-side types (Γ-shaped) winding of electromagnet with incoming and outgoing parts of the winding wire w1 w2: concentrated $\Gamma W$.0, semi-concentrated $\Gamma W$.1 and dispersed $\Gamma W$.2. Herewith the borders of areas of the windings parts, involved and not involved in creation of this winding are divided by planes $P_{pj}$, where j = 1, 2, 3. In all of these types of windings, as shown for single-vector winding, the creation of this winding involves only specified straight winding areas.

Fig. 10a and 10b windings of the multiple-vector single-side winding are presented, for simplicity, in fusion form, respectively, without $FWa.0$ transition to Fig. 10a and anti-symmetrical with the $\Gamma Wa.0$ transition to Fig. 10b.

Two sides of the surface between the two lateral p1 p2 winding parts form two sides of $OW$. The two sides of the surface between the two end p7 and p8 parts of the windings form the two end sides of $OW$. Herewith the angle between the lateral and the end external sides is greater than $\pi$, and the angle between the lateral and the end inner sides are less than $\pi$. The lower $p\tau1$ and lateral $p\tau3$ transverse parts of $\Gamma$-shaped winding are not involved in the creation of an electromotive power of EM.

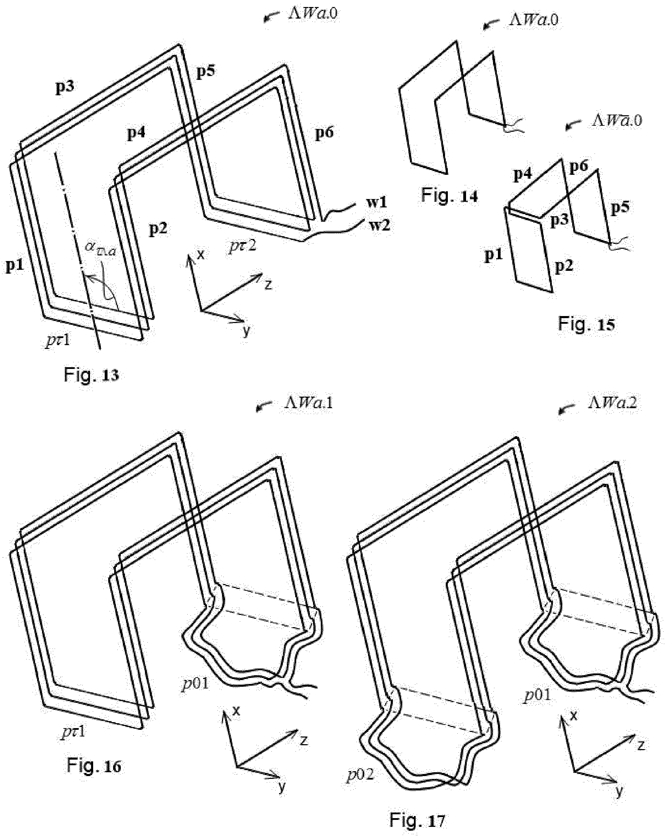

Fig. 13-22b show examples performing some types of double-sided ($\Lambda$-shaped) winding of electromagnet.

Fig. 13,16 and 17 show the dimensional images of multiple-vector types, with a straight upper side parallel to the double-sided winding of the electromagnet with incoming and outgoing parts of the winding wire w1 w2: concentrated $\Lambda Wa$.0, semi-concentrated $\Lambda Wa$. 1 and dispersed $\Lambda Wa$.2. Herewith the borders of windings parts areas of involved and not involved in the creation of this winding are divided by planes $P_{pj}$, where j = 1, 2, 3. In all of these types of windings, as shown for single-vector winding, in creation of this winding involved are only these straight winding areas. Fig. 14 and 15 shows that, the windings of multiple-vector double-sided winding, for simplicity, are presented in fusion form, respectively, without transition to Fig. 14 and anti-symmetric with the $\Lambda \overline{Wa}.0$ transition to Fig. 15.

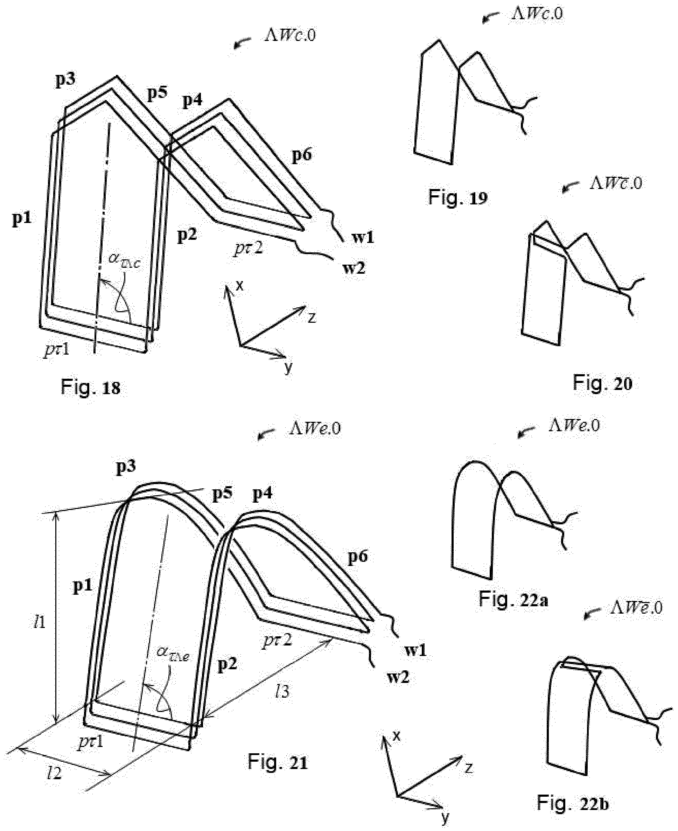

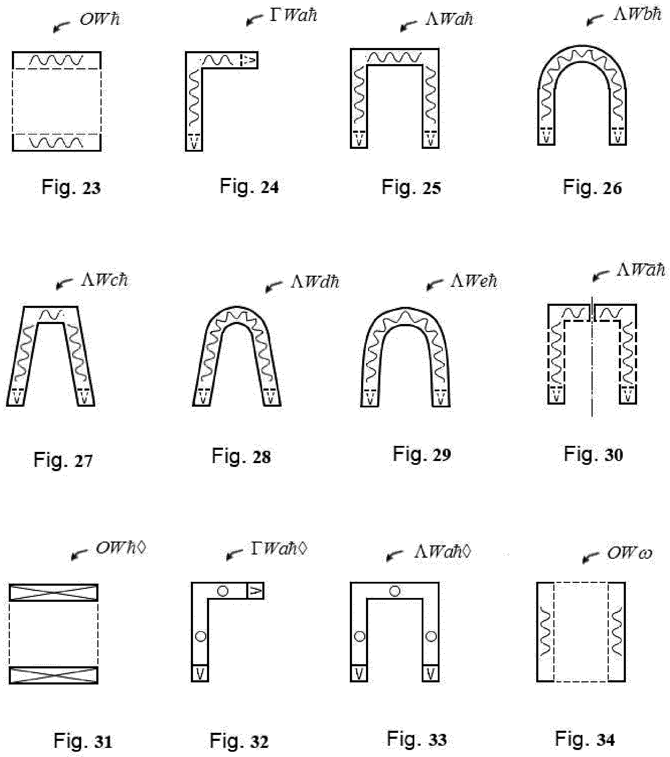

Fig. 18 and 21 show the dimensional images of further two types: with a straight upper side of the divergent $\Lambda \overline{Wa}.0$ and the second order curve $\Lambda We$.0 of concentrated multiple-vector double-sided windings of electromagnets. Fig. 19 and 20 show that the windings of multiple-vector double-sided winding $\Lambda Wc$.0 are represented, for simplicity, in fusion form, respectively, without transition to Fig. 19 and anti-symmetrically with transition to Fig. 20. Fig. 22 and 23 show that the windings of multiple-vector double-sided winding $\Lambda We$.0 are presented, for the simplicity, in fusion form, respectively, without transition to Fig. 22a and anti-symmetrically with $\Lambda \overline{We}.0$ transition to Fig. 22b.

In all types of double-sided (A -shaped) winding of the electromagnet: two sides of the surface between the two lateral parts p1 and p2 of the winding form two sides of the left part of $OW$; two sides of the surface between the two lateral parts p5 and p6 of the winding form two sides of the right part of $OW$. The two sides of the surface between the two end p3 and p4 parts of the winding form two end sides of $OW$. Herewith the angle between the lateral and the end external sides is greater than $\pi$, and the angle between the lateral and the end inner sides is smaller than $\pi$, Fig. 21 also shows the designations of parameters of $\Lambda$ - shaped windings: height $l$1; width $l$2; the distance $l$3 between the lower transverse parts of the winding at its base.

The lower transverse parts $p\tau1$ and $p\tau2$ of the $\Lambda$ -shaped winding are not involved in the creation of an electromotive power of EM. The two sides of the surface between the two lower transverse parts $p\tau1$ and $p\tau2$ of the $\Lambda$ -shaped winding form its inner and lower side.

Fig. 23-33 show the symbolic forms of the electromagnets windings in the $\hbar$ -plane. Fig. 23 shows single-vector - $OW\hbar$. Fig. 24-30 show multiple-vector: single-sided - $\Gamma Wa\hbar$; with straight upper side parallel double-sided - $\Lambda Wa\hbar$; with semicircular upper side parallel double-sided - $\Lambda Wb\hbar$; with straight upper side diverging double-sided - $\Lambda Wc\hbar$; with sector-circular upper side of the diverging double-sided - $\Lambda Wd\hbar$; double-sided form second order curve type - $\Lambda We\hbar$; with straight upper side parallel double-sided anti-symmetric - $\Lambda \overline{Wa}\hbar$. Fig. 31-33 show sections views of the electromagnets windings: single-vector - $OW\hbar\lozenge$; multiple-vector single-sided - $\Gamma Wa\hbar\lozenge$; multiple-vector double-sided - $\Lambda Wa\hbar\lozenge$.

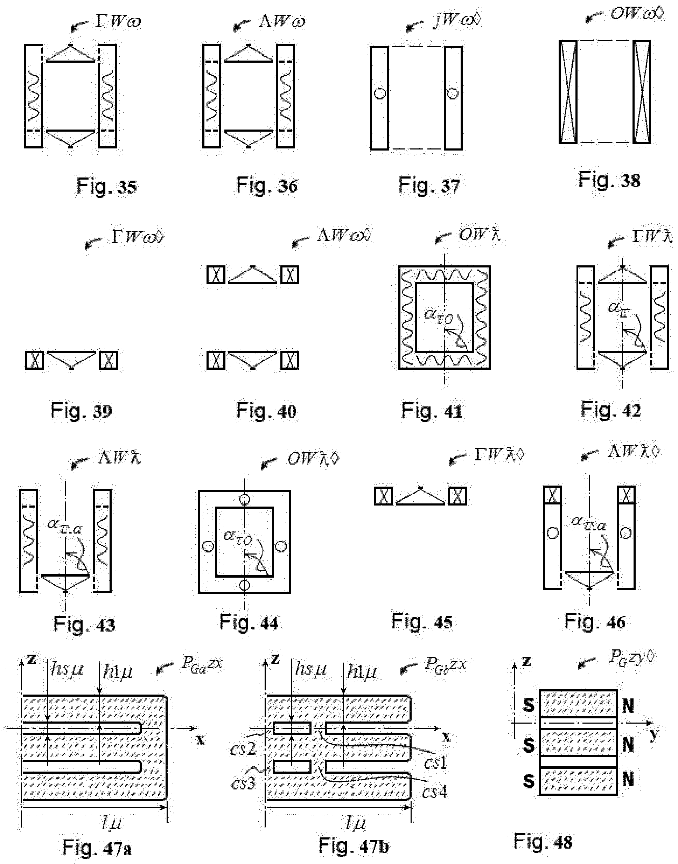

Fig. 34-40 show the symbolic forms of the electromagnets windings in the $\omega$-plane. Fig. 34 shows single-vector - $OW\omega$. Fig. 35 and 36 show: a multiple-vector single-sided - $\Gamma W\omega$; multiple-vector double-sided - $\Lambda W\omega$. Fig. 37-40 show winding sections types: general for any type of **winding** - $jW\omega\lozenge$, wherein $j = O,\Gamma,\Lambda$; single-vector - $OW\omega\lozenge$; multiple-vector **single-sided** - $\Gamma W\omega$; multiple-vector double-sided - $\Lambda W\omega\lozenge$.

Fig. 41-46 show the symbolic types of the electromagnets windings in the $\lambda$ -plane. Fig. 41 shows single-vector - $OW\lambda$. Fig. 42 and 43 show: multiple-vector single-sided - $\Gamma Wa\lambda$; multiple-vector double-sided - $\Lambda W\lambda$. Fig. 44-46 show electromagnets winding sections types: single-vector - $OW\lambda\lozenge$; multiple-vector single-sided - $\Gamma W\lambda\lozenge$; multiple-vector double-sided - $\Lambda W\lambda\lozenge$.

To create a high voltage magnetic field with a small volume and a high resistance to extreme environmental conditions of permanent magnet the present invention proposes using closed-multi-layer $P_G$ -type of magnets, and anti-symmetric group of magnets, which enable to create with high voltage and resistance, with a given voltage direction of the magnetic field in the dimension. Fig. 47-58 show some examples of performing the types of the proposed closed-multi-layer $P_G$ -type of magnet, and anti-symmetric group of magnets - their formations, symbolic designations, dimensional orientation in the reporting system of coordinates.

Fig. 47a, 47b and 48 show two types of closed-multi-layer $P_G$ -type magnet, with a particular case, when the magnet has a total of three layers and they are straight. Of course they may contain two or more than three layers, and may also also be curved. In any case: the width of the gap between layers is small $hs\,\mu \to 0$, the layer thickness is less than its length $h1\mu \prec l\mu.$

Fig. 47a and 47b show the two types of closed-multi-layer $P_G$-type of magnet in the longitudinal vertical plane, respectively closed at the edges $P_{Ga}zx$ type and a closed through jumper $P_{Gb}zx$ type. Fig. 47b shows that: the layers are closed through four jumpers $cs1,\ cs2,\ cs3$ and $cs4$; doubly-symmetric relative the two planes - coordinate zy-plane and geometric mean plane, parallel to the coordinate xy-plane. In general, these conditions are not required - the number of jumpers and dimensional configurations can be arbitrary. Fig. 48 shows $P_G$ -type of magnet in the section of transverse-vertical plane.

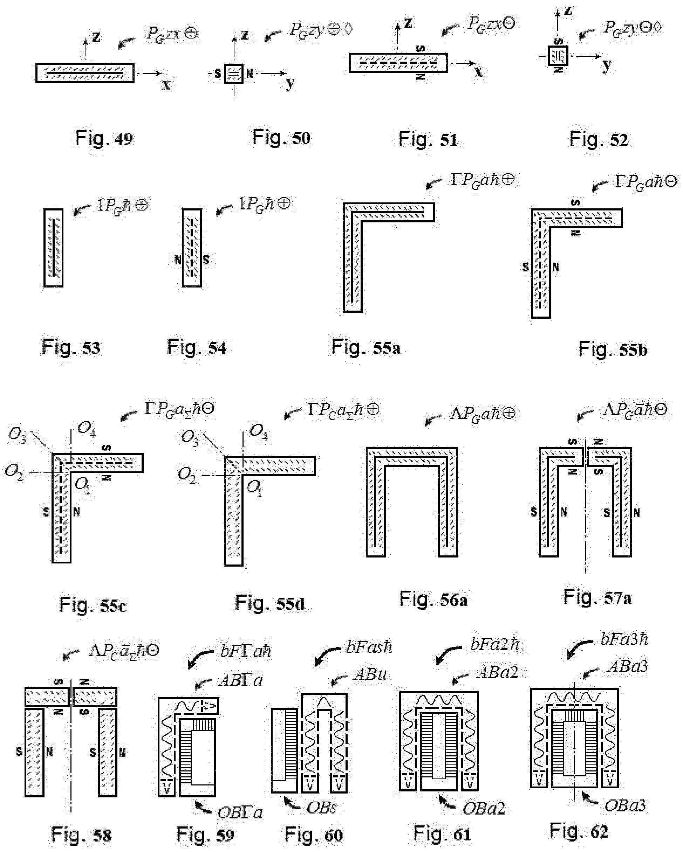

Fig. 49-52, in said two inter-perpendicular planes zx and zy, show the symbolic designations of $P_G$ -type of magnet: symbolic designations in Fig. 49 and 50 correspond the magnet positions shown in Fig. 47 and 48; symbolic designations in Fig. 51 and 52 of correspond the magnet positions, when the coordinate of plane zx is parallel to the longitudinal horizontal plane of the magnet.

Fig. 53-58, in said $\hbar$ -plane (xz-plane of electromagnets windings) show some symbolic designation of the geometry of the $P_G$ -type magnet and anti-symmetric group of magnets formation. Fig. 53 and 54 show symbolic designations of magnets shown in the Fig. 49 and 51, respectively, directed by the (towards us) unipolar side $1P\hbar\oplus$ and by the bipolar side $1P\hbar\ominus$. Fig. 55a and 55b show multiple-vector single-sided magnets, respectively, directed by the unipolar side $\Gamma P_G a\hbar\oplus$ and by the bipolar side $\Gamma P_G a\hbar\ominus$. Fig. 55c and 55d show respectively multiple-vector single-sided magnet directed by bipolar side $\Gamma P_G a_\Sigma \hbar\ominus$ and consisting of two not layered magnets $\Gamma P_C a_\Sigma \hbar\oplus$ , which consist of two parts, separated by any of the planes $O_1O_2,\ O_1O_3$ and $O_1O_4$. Fig. 56a shows directed by unipolar side multiple-vector double-sided magnet $\Lambda P_G \hbar\oplus$. Of course at the multiple-vector double-sided magnets can also be such a variety, as we have shown for the multiple-vector single-sided magnets. Fig. 57a and 58 show multiple-vector double-sided magnets, each of which is an anti-symmetric group of magnets: $\Lambda P_{\overline{G}} a\hbar\ominus$ - consisting of two $\Gamma P_G a\hbar\oplus$-**types** of magnets; $\Lambda P_C \overline{a_\Sigma \hbar}\ominus$ - **consisting** of four not layered magnets.

Fig. 59-81, in said $\hbar$ -plane (xz-plane of electromagnets windings) in symbolic designations show some of the possibilities of forming kinds of block structure (interposition principles of various types of inducing blocks) in SIB. The block structure of SIB conditionally it is possible to distinguish at least one of the blocks fractions: basic SIB fraction; closed SIB fraction; Z z - integrated SIB fraction; X x - integrated SIB fraction. Herewith the nature of blocks dimensional disposition the multi-block SIBs are divided into: single-row structure, double-row structure, multi-row structure.

The lateral, end and lower sides of the basic, closed SIB factions and the electromagnetic block, will be assumed as the appropriate sides of the electromagnet winding.

Note that in the figures: the dashed lines with dots are axes of symmetry; short-dashed lines indicate that the image chain is broken, and it can be continued same as the pictures shown.

The basic fraction is formed by electromagnetic block, created on the basis of the chain of one of the winding types mentioned in the Fig. 23-30, and docked with it non-source block. Fig. 59-64 show the basic SIB fractions $bF\Gamma a\hbar,$ $bFas\hbar,\ bFa2\hbar,\ bFa3\hbar,\ bFb\hbar$ and $bF\overline{a}2\hbar$ , which are formed, respectively, by electromagnetic blocks $AB\Gamma a,\ ABu,\ ABa2,$ $ABa3,\ ABb$ and $AB\overline{a}2$ when docking the appropriate them non-source blocks to them: the internal $OB\Gamma a$ ; side $OBs$ ; internal $OBa2,\ OBa3,\ OBb$ and $OB\overline{a}2$. **All** electromagnetic blocks, except for the closed electromagnetic block $ABu,$ and a single-vector electromagnetic block $ABO,$ are open. In the closed electromagnetic block $ABu$ the distance between the sides is made small and without the possibility of placing the non-source OEB block there.

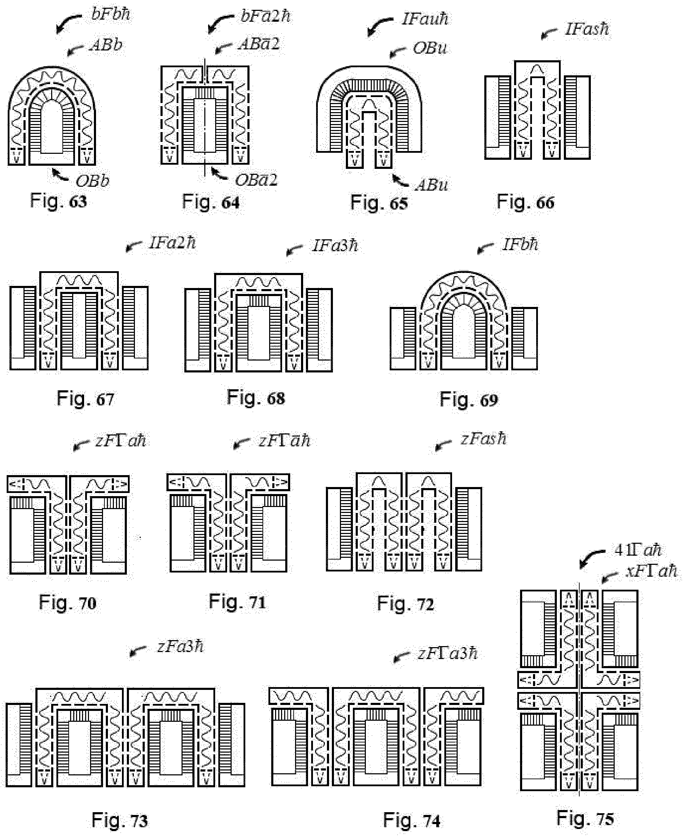

Closed factions are formed by additional docking of the non-source blocks elements to the basic fractions, wherein only one side of the electromagnetic block remains open. Some of the closed SIB fractions are shown in Fig. 65-69: $IFau\hbar,\ IFas\hbar,\ IFa2\hbar,\ IFa3\hbar$ and $IFb\hbar$. In closed factions the certain exception is $IFau\hbar$ that is formed by the docking of closed electromagnetic block $ABu$ with semicircular non-source block $OBu$ .

Non-source OEB blocks, as already noted, are divided into lateral non-source $OBs$ blocks and into non lateral non-source blocks: internal $OB\Gamma a$ ; internal $OBa2,\ OBa3,\ OBb$ , and $OB\overline{a}2$ ; semicircle $OBu.$

z - integrated SIB fraction is formed by docking of the two electromagnetic blocks of basic fraction by the sides of its **AMB,** wherein z - integrated SIB fraction may further comprise one or more non-source blocks. Some of the examples of forming z - integrated SIB fraction are shown in Fig. 70-74:

x - integrated SIB fraction is formed by docking of the two electromagnetic blocks of basic fractions by its active (in creating electromotive power in EM) end side. Herewith x - integrated SIB fraction may further comprise one or more non-source blocks. Some examples of formation of x - integrated SIB fraction are shown in Fig. 75, 76a and 80, respectively, $xF\Gamma a\hbar,\ xFa3\hbar$ and $xFas\hbar$ as part of multi-block SIB structures.

Single-row SIB structures include at least two electromagnetic blocks, and any of them can be formed on the basis of selecting from a plurality of said basic, closed and z - integrated SIB fractions, docking them between each other at the sides.

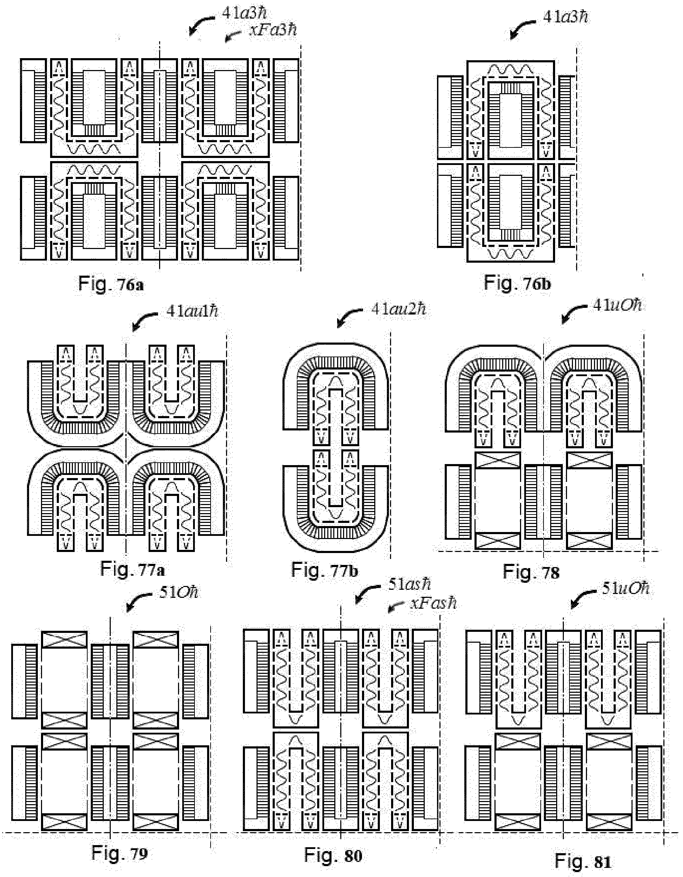

Double-row SIB structures as shown in the example in Fig. 75-81, can be formed from two single-row SIB structures. At least three-row SIB structures is expedient, for the workability of assembly and repair, to form with the OEB, configured in a lateral type of *OBs* , as shown by way of example in Fig. 79-81, or in the form of a OEB, configured in a lateral *OBs* type in all rows, except one of the outer rows, as shown, by way of example, in Fig. 78.

These Figures show not all possible options of SIB structure forming, but we have given the principles of their construction and it is not difficult for specialists to continue building and further, based on and on the analogs of the given examples. For example, in Fig. 78 and 81 the upper rows of the blocks can be rotated vertically; in Fig. 80 one of the rows or both rows of blocks can be rotated vertically. When docking structural fractions the sides of two adjacent OEBs in Fig. 76a, 77a, 78-81 are attached (configured together), but in any of such structures they may be docked separately (placed closely) and may also be movable relative to each other.

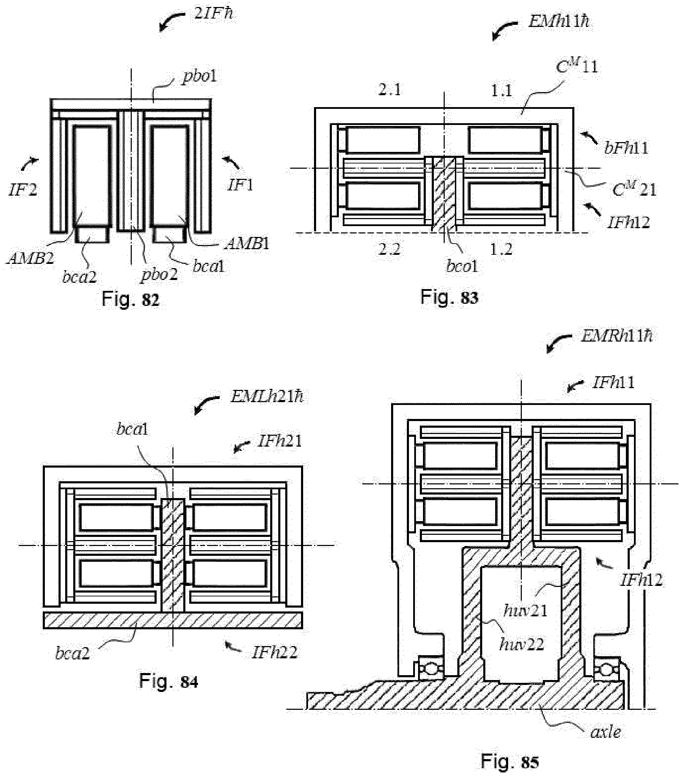

Fig. 82, in $\hbar$ -plane schematically shows the principle of association (attachment) of two closed factions *IF*1 and *IF*2 in SIB between each other through common magnet-conductive bridges *pbo*1 and *pbo*2. Herewith the electromagnetic blocks *AMB*1 and *AMB*2 have separate intermediate platforms *pbo*1 and *pbo*2, respectively, for attaching them to a common support. Electromagnetic blocks, in this case *AMB*1 and *AMB*2 , together, form SSAMB, the remaining SIB part forms SSOEB.

Consider the possibility of placing and scanning SIB blocks in EM. Herewith, as already mentioned, the vertical EM plane is compatible with said $\hbar$ -plane (xz-plane of the electromagnets windings).

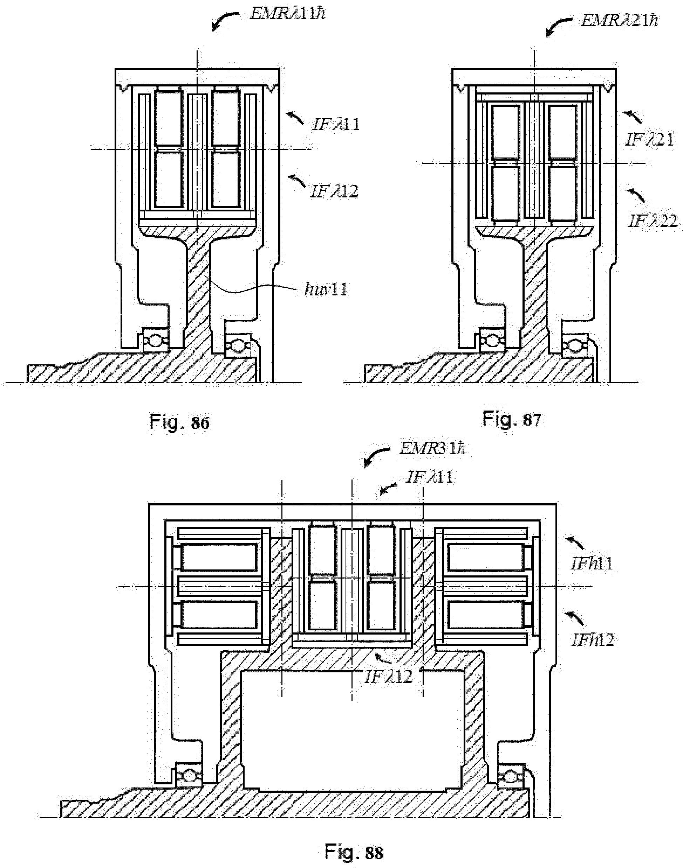

Fig. 83-88, on the basis of the representation in Fig. 82, show some of the types of scanning of SIB blocks: Fig. 83-85 show a vertical scan ($\hbar$ -scanning) of SIB blocks with lateral attachment of one of the SSIB; Fig. 86 and 87 show a horizontal scan ($\lambda$ -scanning) of SIB blocks with upper end attachment of one of the SSIB; Fig. 88 shows a mixed SIB block scanning with its mixed attachment.

Fig. 83-88 by the intersecting point-dotted lines the SIB areas are divided into four (Fig. 83-87) or in to eight quadrants (Fig. 88), each of which comprises a basic fraction or a closed fraction. Herewith any SIB area is symmetrical relative to a central vertical point-dotted line, and therefore, designations of SIB components are introduced only one of the symmetrical SIB parts.

Fig. 83 comprises a base fraction *bFh*11 and a closed fraction *IFh*21. On the basis of Fig. 83 shown are some of the rules that adheres to all of Fig. 83-87:

- quadrants numbering is carried out on the column of the right hand, for example,, and thereafter;
- shown types of SIB attachments apply for any kind of linear and rotational EM - SSOEB - intermediate platform *bco*1 can be attached to the main support (to the central support shaft of rotational EM or reference platform of linear EM);
- at the lateral SSIB attaching the one of the SSIB is attached at least to one side $C^M$ 21 and $C^M$ 22 of the body, wherein the upper end side $C^M$ 11 of the body may be free.

Fig. 84 shows a linear EM *EMLh*21$\hbar$, in which the sides of the body attached are SSOEB. Herewith, the SSAMB through an intermediate platform *bca*1 is attached to the support platform (base) *bca*2 of the linear EM.

Fig. 85-88 show rotational EM, respectively, *EMRh*11$\hbar$, *EMR$\lambda$*11$\hbar$, *EMR$\lambda$*21$\hbar$ and *EMR*31$\hbar$ types, in which one of the subsystems of SSIB blocks near the border of other SSIB are attached to the intermediate platform, which is through one hub *huv*11, for example, such as in *EMR$\lambda$*11$\hbar$, *EMR$\lambda$*21$\hbar$, or more hubs, for example, such as in *EMRh*11$\hbar$ *EMR*31$\hbar$ through two hubs, *huv*21 and *huv*22, is connected to the central shaft *axle.* The number of hubs is not critical, and will not depend on the mechanical rigidity of the requirements of the EM components.

Fig. 85 shows the attached SSAMB to the upper side of the body. Wherein SSOEB is attached to the central support shaft *axle.*

Fig. 86 shows the attached SSAMB to the upper end side of the body. Wherein SSOEB is attached to the central support shaft *axle.*

Fig. 87 shows the attached SSOEB to the upper end side of the body. Wherein SSAMB attached to the central support shaft *axle.*

Fig. 88: out of eight SSAMB blocks fractions four are attached to the upper end side of the body, and the remaining four are attached to the sides of the body; SSOEB is attached to the central support shaft *axle.*

Fig. 89-95, 107-117 in **the $\omega$-plane in the symbolic designations show principles of the** internal structures of the AMB and the OEB in SIB.

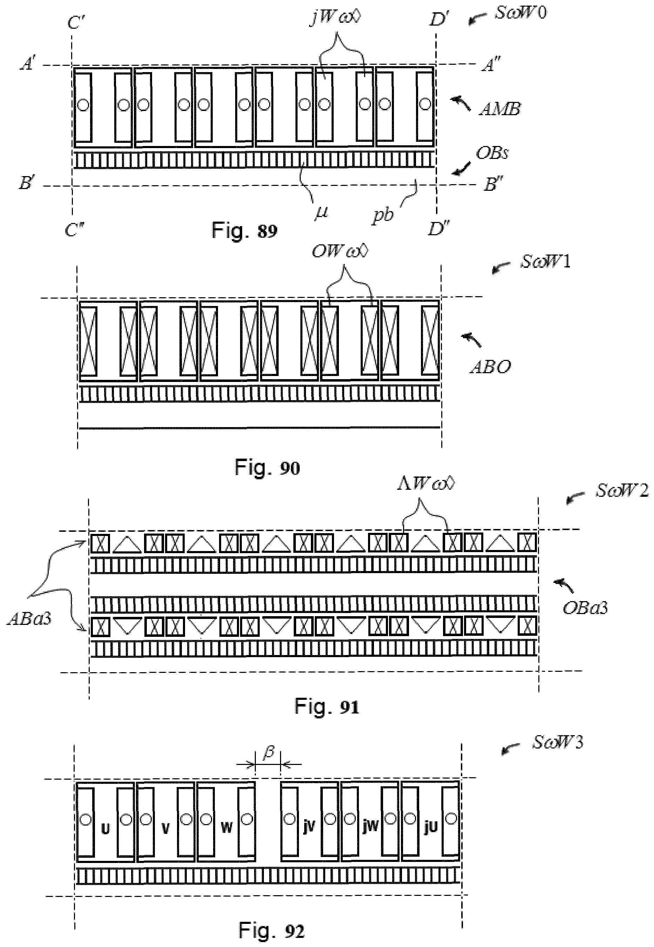

Fig. 89 shows the SIB sector, interrupted on all four sides by broken lines, within the frames of which the internal structures of blocks will be considered. Herewith the designations are introduced: AMB electromagnet block; general form of the section for any type of electromagnet windings *jW$\omega$◊*, wherein *j = O*,$\Gamma$,$\Lambda$; side non-source block *OBs*; induction-inhomogeneous environment $\mu$ ; bridge/bus of magnetic field *pb.* As noted regarding Fig. 59-81, the final designs of types of the block structure forming (principles of relative position of different kinds of interacting blocks) in SIB may be varied. Of course, in the special case the winding section must confirm to one of the analogues shown in Fig. 38-40. To demonstrate this, in Fig. 90 and 91 shown are, respectively: single-vector winding *ABO* in the section *OWω◊*; multiple-vector winding *ABa*3 in the section *ΛWω◊*. Herewith the *SωW*2 sector of the SIB systems has an additional block - internal non-source block of *OBa*3 type.

Fig. 92-106 show some of the features of electromagnets windings as part of SIB system.

Fig. 92 shows a SIB sector *SωW*3 with ternary winding electromagnets ensembles. Herewith the block of ternary electromagnets ensembles have a period of two groups of electrical phases *U V W* **and** */U /V /W,* in which the difference of electrical phases from each other is *β*. Note that a block may consist of several separated from each other parts, and two groups of electrical phases *U V W* **and** */U /V /W* may be located in different parts of the block. As mentioned in the review of sources, for example, in US 8624446, and US 20130076159 A1 the discussed winding options can be transferred to the proposed contact SSAMB.

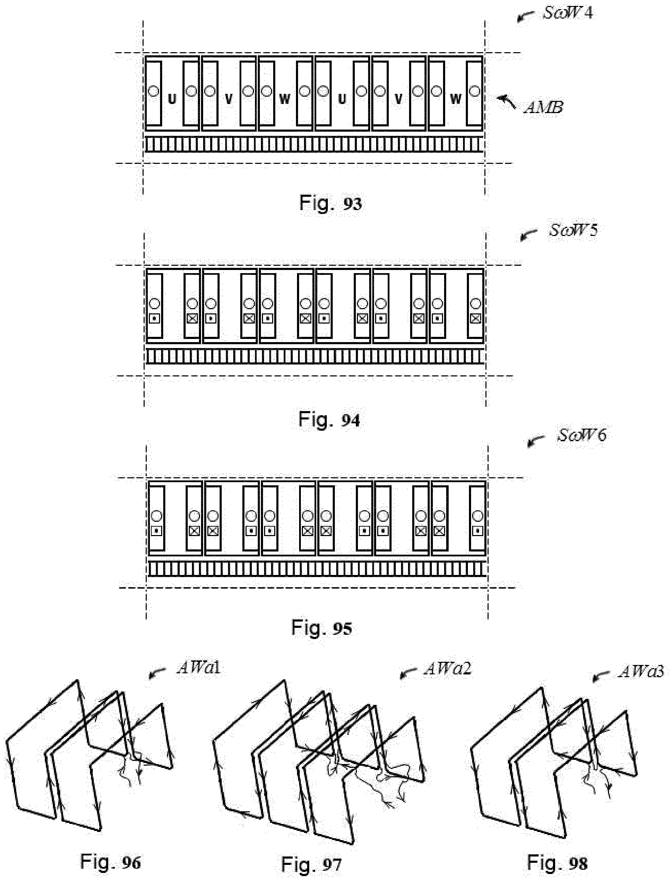

Fig. 93 shows a single AMB block for the three-phase amperage. Fig. 94 and 95, respectively show the case of anti-parallel and antiparallel amperages of unilocular parts of two adjacent windings.

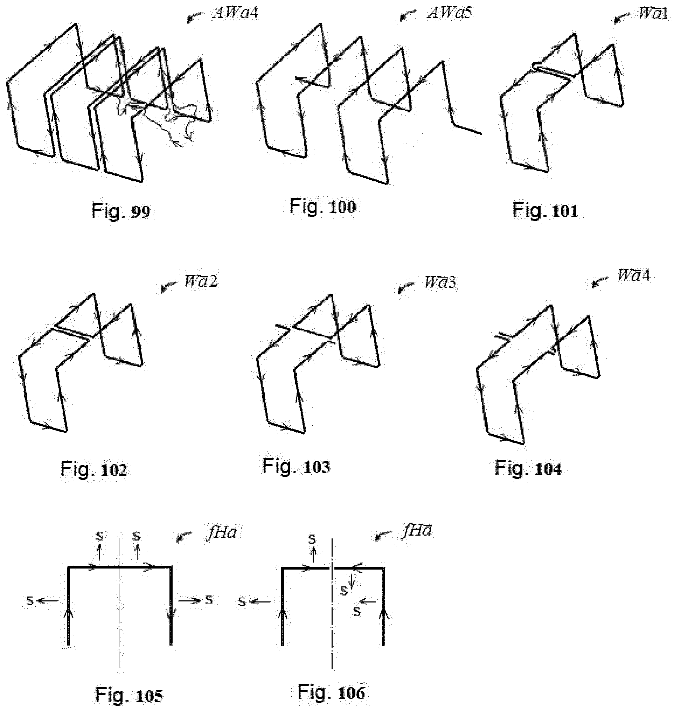

Fig. 96-106, show some examples of the multiple-vector double-sided windings. Fig. 96-99 show the options of ensuring the implementation of parallel (Fig. 96 and 97) and antiparallel (Fig. 98 and 99) amperages in unilocular parts of two adjacent windings at one pair of input and output of windings for two or three winding ensembles. Fig. 100 shows an example of semi-concentrated winding. Fig. 101-104 show examples of performing the docking of the two parts of the multiple-vector double-sided anti-symmetric windings. Fig. 105 and 106 show the orientation of the magnetic field vectors at different parts of the winding, respectively, for the symmetric and anti-symmetric windings.

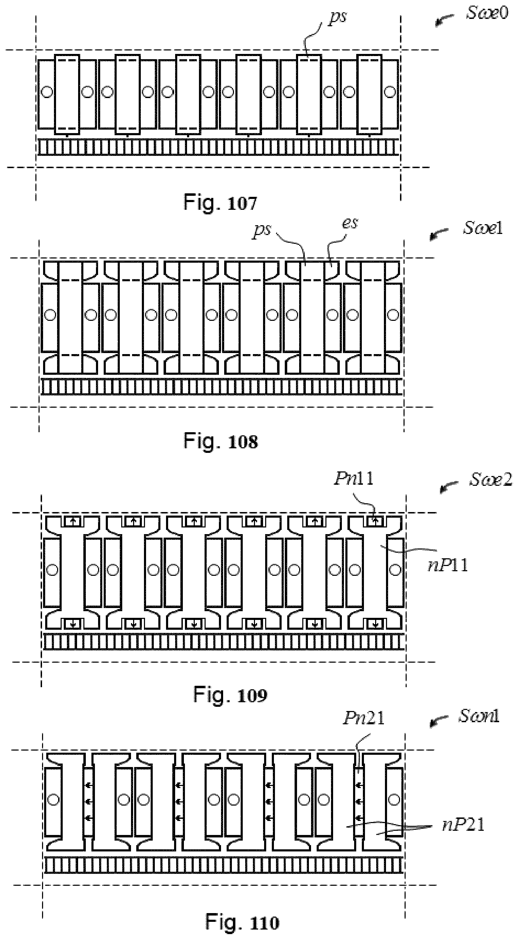

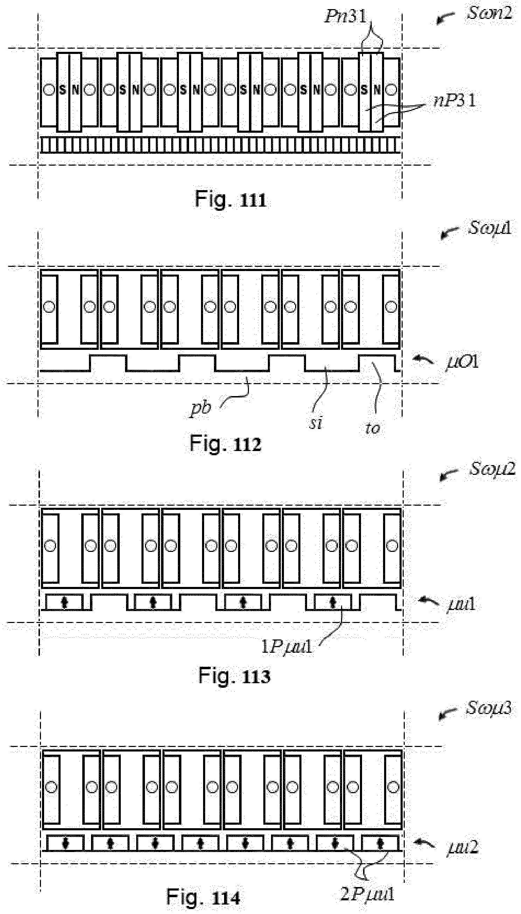

Fig. 107-111 show the options of performing the cores of the electromagnets. Fig. 107 shows the cores *ps* of the electromagnets quadrangular caps/cogs. Fig. 108 shows the cores caps of the electromagnets with removable shoes *es.* The shoes may not be removable. Fig. 109 shows the shoes of the electromagnets with the permanent magnets *Pn*11 displaced on them. Herewith there may be several permanent magnets on each shoe. Fig. 110 shows a core *nP*21 consisting of two parts, between which a magnet *Pn*21 is placed. Fig. 111 shows a core *Pn*31 configured in the form of two magnets.

Fig. 112-117 show types of OEB execution, in which the magnetic bridges/buses *pb* and heterogeneities of inductive interaction includes magnet-soft materials. Fig. 112 shows the heterogeneity of the inductive interaction $\mu O1$*,* performed in the form of periodically displaced cogs *to* and **cavities** *si* in the magnet-soft material. Fig. 113 shows heterogeneity of inductive interaction $\mu u1$*,* which in contrast to Fig. 112, in the **cavities** *si* further displaced are single-directed permanent magnets 1*P$\mu$u*1. Fig. 114 shows the heterogeneity of inductive interaction $\mu u2$*,* performed in the form of periodically displaced multi-directional permanent magnets 2*P$\mu$u*1.

It is known that the surfaces of the OEB, addressed to the AMB, can have a constant curvature or periodically variable curvature. Herewith the permanent magnets may be configured on the surface or in a pocket, or partially in the pocket of the bridge/bus from magnet-soft material.

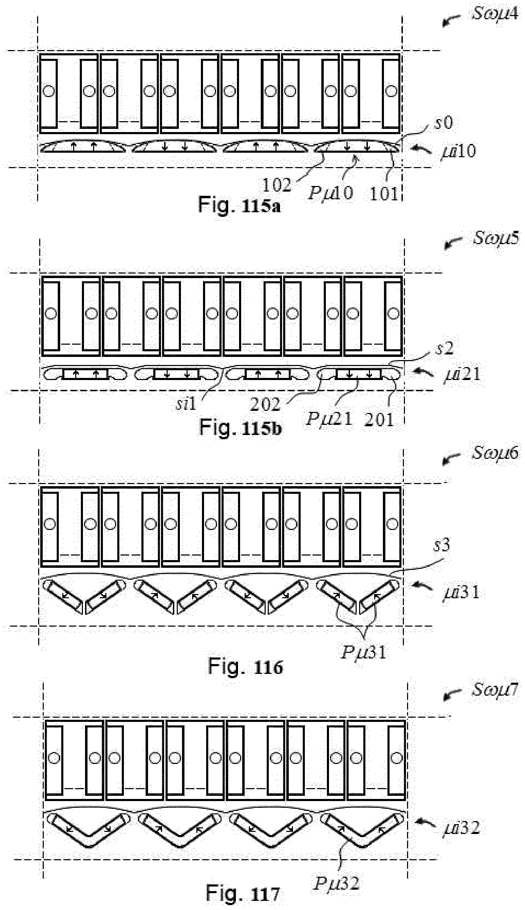

Fig. 115a shows heterogeneity of inductive interaction $\mu i10$ with the permanent magnets of *P$\mu$*10 type, partially performing in a pocket of magnet-soft material. Herewith, as in Fig. 115b - 117, the surfaces *s*0 of the OEB, addressed to the AMB, have a periodic variable curvature (petal-shaped). Note that at least one of the parts 101 and 102 of the permanent magnet *P$\mu$*10 may be absent, in particular it may instead be an air layer.

Fig. 115b-117 show the types of performing OEB, in which permanent magnets are displaced in the pockets of bridge-bus from the magnet-soft material. Fig. 115b shows the heterogeneity of the inductive interaction $\mu i21$*,* which includes periodically displaced multi-directional permanent magnets *P$\mu$*21. Herewith the surfaces *s*2 of OEB, addressed to AMB, is performed flat and at least on one side of each magnet *P$\mu$*21 there is a recess *si*1 and an air bag 201. Fig. 116 and 117, respectively, show the types of configuring inhomogeneities of inductive interaction, in which a magnetic pole is formed, respectively: by the composition of several magnets *P$\mu$*31 and *P$\mu$*32; curved permanent magnet *P$\mu$*32*.* Herewith the surface *s*3 of the non-source OEB block, addressed to the electromagnetic AMB block is performed periodically to the variable curvature (petal-shaped).

Let us turn to the possibility of the multiple-vector armature windings, including cores and shoes) blocks for multiple-vector single-sided (Γ-shaped) electromagnet winding and various types of multiple-vector double-sided (A -shaped) electromagnet winding shown in Fig. 24-30. All of them, except a closed type electromagnet, which can be included in the closed-type electromagnetic block *ABu,* in particular indicated in Fig. 60 and 65, may be performed on a single principle. Types of double-sided (Λ -shaped) armatures differ from one another by their common form, in accordance with the form of said forms of the electromagnet windings types. Armature of single-sided (Γ -shaped) electromagnet winding can be configured as a half double-sided (Λ -shaped) armature.

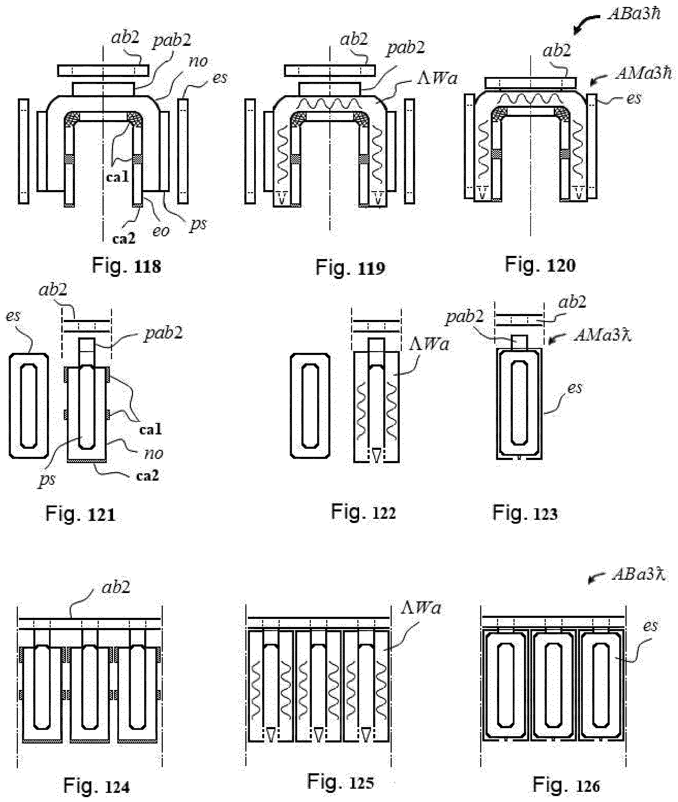

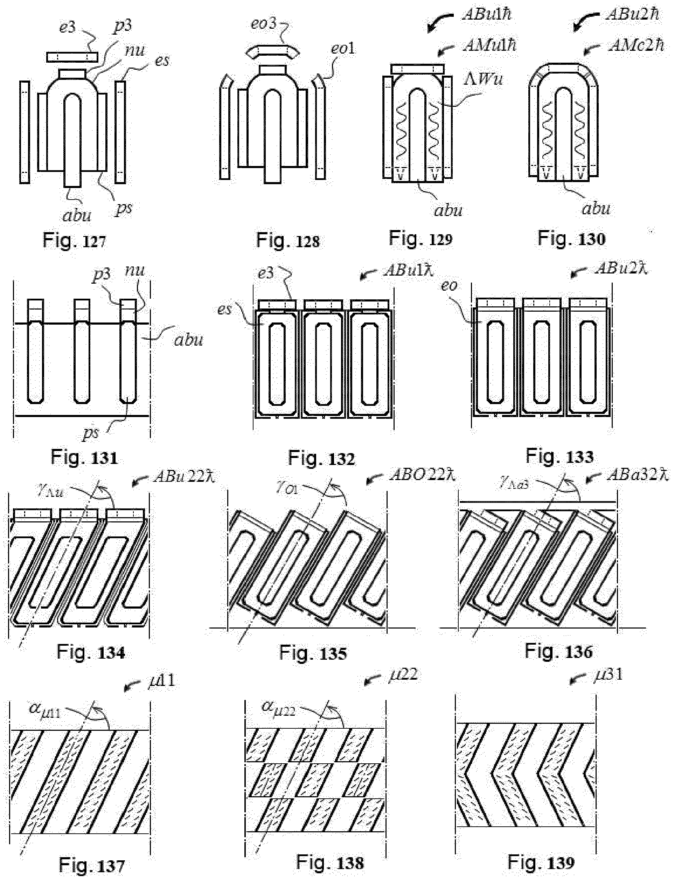

The possibility of constructing a multiple-vector double-sided types (Λ -shaped) of armature and on its basis of multiple-vector electromagnetic blocks and SIB fractions will be shown on the example of the analysis of the electromagnetic blocks implementation: open type electromagnetic block *ABa3* and in its composition an open type electromagnet *AMa3* in Fig. 118-126; closed type electromagnetic **block** *ABu2ħ* and in its composition a closed type electromagnet *ABu* in Fig. 127-133.

Fig. 118-120 show an open type electromagnetic block *ABa3* and in its structure an open type electromagnet *AMa3* in projection on $\hbar$ -plane of EM. Fig. 118 shows electromagnetic block *ABa3* without winding and in a disassembled view, which shows: the magnetic bridge/bus *ab2* of electromagnet and for its landing cap/cog *pab2*; kernel/core of winding *no*; side electromagnet shoe *es* and for its planting cap/cog *ps*; inner shoe *eo;* additional side directing limiters *ca1* and the lower directing limiter *ca2* of electromagnet winding. Fig. 119 shows the same as that in Fig. 118, but includes an ΛWa electromagnet winding. Fig. 120 shows the electromagnetic block *ABa3$\hbar$* assembled. Fig. 120 shows all the components, except the external magnetic bridge/bus of *ab2* electromagnet and cap/cog for planting *pab2 ,* relate to the electromagnet *AMa3$\hbar$.*

Fig. 121-126 show sector of the block *ABa3* and in its composition electromagnet *AMa3* in projection on $\lambda$ -plane of EM. Fig. 121 and 122 correspond to Fig. 118 and 119, but are shown in $\lambda$ -plane. Fig. 123 shows the same as Fig. 120, but is presented in $\lambda$ - plane and the magnetic bridge/bus electromagnet *ab2* shown separately from the electromagnet *AMa3$\lambda$*. Fig. 124-126 show a *ABa3$\lambda$* block sector: Fig. 124 shows - without shoe *es* and winding *AWa* ; Fig. 125 shows - without shoe *es* ; Fig. 126 shows - *ABa3$\lambda$* in full. It should be noted that the additional lateral directional limiters *ca1* and *ca2* of the electromagnetic winding can be made solid, and made of a magnetic insulation material.

We turn to the question of the possible implementation of a closed type electromagnet. Fig. 127-130 show closed type electromagnetic block *Abu2$\hbar$* and it includes a closed type electromagnet *ABu* in projection on $\hbar$ -plane of EM. Fig. 127 shows electromagnetic block *ABu* without winding and in a disassembled view, which shows: the internal magnetic bridge/tire electromagnet *abu*; kernel/ core of the winding *nu*; side flat electromagnet shoe *es* and for its planting cap/cog *ps*; upper flat electromagnet shoe e3 and for its planting cap/cog *p3*. Fig. 128 shows the same as that in Fig. 127, but at least one of the side shoe *eo1* of electromagnet and the upper shoe *eo3* of electromagnet are configured in a curved form. Fig. 129 and 130 correspond to Fig. 127 and 128, but include winding ΛWu and are shown in assembled form as two electromagnetic blocks *ABu1$\hbar$* and *Abu2$\hbar$,* accordingly, with external flat shoes and with external curved shoes, which comprise a magnetic bridge/bus *abu* of electromagnet, respectively, closed type electromagnets of *AMu1$\hbar$* and *AMu2$\hbar$* type.

Fig. 131-133 show in projection on **EM** $\lambda$ -plane sectors of closed type electromagnetic blocks *ABu1$\lambda$* and *ABu2$\lambda$*: Fig. 131 shows - without shoes *ps* and without winding *AWu* ; Fig. 132 and 133 show, respectively, the sectors of closed type electromagnetic blocks with flat shoes *ABu1$\lambda$* and with curved shoes *ABu2$\lambda$* in its entire composition.

Fig. 121-133 shows AMB sectors in which vertical-center lines of the lateral sides of the winding and the shoe of the electromagnet are perpendicular to the direction of their relative movement with OEB. In general, the vertical-center lines of the lateral sides of the winding and the shoe of the electromagnet can make towards the direction of its relative motion with OEB an angle $\gamma$ different from the $\dfrac{\pi}{2}$. Some examples implementation of such options of the AMB are shown in Fig. 134-136, where the angles $\gamma_{\Lambda u}$, $\gamma_{O1}$, $\gamma_{\Lambda a3}$ correspond to said $\gamma$ angle location to the relative motion for: *AMu22$\hbar$,* which is an analog to an oblique position relative to the said perpendicular sector of *closed type **electromagnetic** block AMu2$\hbar$* ; *ABO22$\lambda$,* which is an analog to an oblique position relative to perpendicular position of the said sector of single-vector *type of electromagnetic block AMO1$\lambda$*; *AMa32$\lambda$,* which is an analog to the oblique position relative to the perpendicular position of the said sector of open *type of electromagnetic block AMa3$\lambda$.*

Fig. 137-139 show the OEB sectors $\mu11$, $\mu22$, in which vertical-center lines composing inductive-inhomogeneous environment towards the direction of its relative movement with AMB, form, respectively, the angles $\alpha_{\mu11}$, $\alpha_{\mu22}$, as well as the OEB sector, the inductive-inhomogeneous environment components of which are curved. In the particular case it may be, that the $\alpha_{\mu11} = \dfrac{\pi}{2}$, $\alpha_{\mu22} = \dfrac{\pi}{2}$.

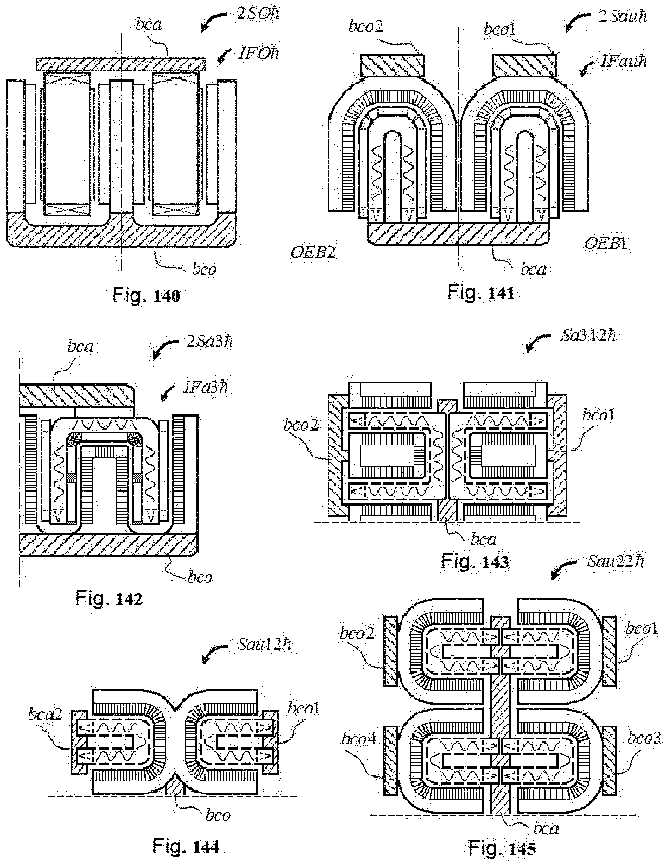

Fig. 140-146, based on the shown Fig. 59-88, show a number of principles of blocks disposition in EM depending on the types of blocks. Herewith introduced are the designations: *bca, bca1, bca2* are intermediate platforms to connect the electromagnetic blocks to their supports; *bco, bco1, bco2, bco3* and *bco4* are intermediate platforms to connect non-source blocks to their supports.

Fig. 140-142 show single-row chains of closed fractions respectively, *IFO$\hbar$, IFau$\hbar$, IFa3$\hbar$* with indication of their intermediate platforms *bca, bco, bco1* and *bco2* for connecting them to docking supports in EM. Single-row chain can consist of at least two combined at the lateral sides basic and/or closed SIB fractions. Herewith, in any of them, the adjacent *OEB1* and *OEB2* may be configured together, as shown in Fig. 140, or separately, as shown in Fig. 141.

Fig. 143-145 show possibilities of attachment of blocks in EM for double-row SIB structures, shown in Fig. 75-77b. Any of such structures in EM can be placed as vertical scanning and appropriately, in order to ensure that joining areas of blocks to each other (Fig. 143 and 145 show intermediate platforms *bca,* and Fig. 144 shows intermediate platform *bco*) can be attached to the main support of EM. Herewith Fig. 145 shows intermediate platforms *bco*1 and *bco*2 can be attached to the one side support, and the intermediate platforms *bco*3 and *bco*4 to the other side support, allowing them to move independently, such as spinning in different directions.

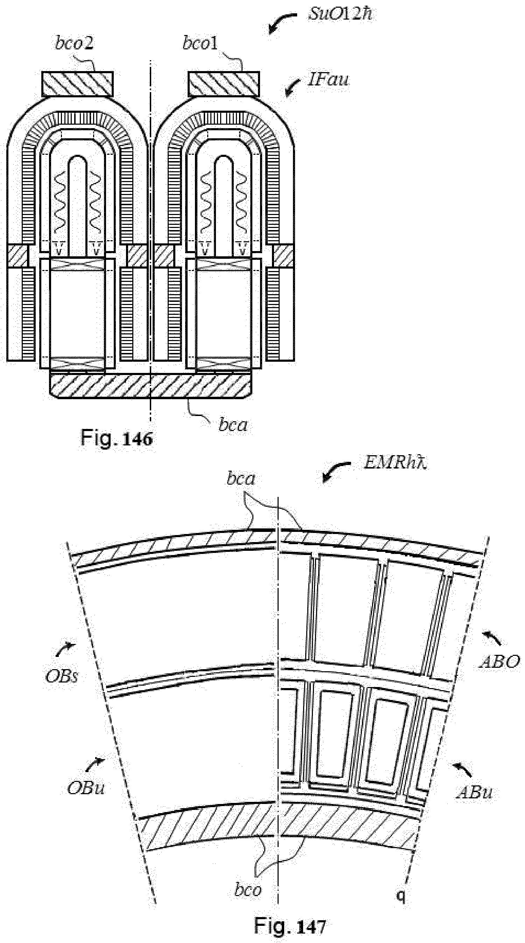

Fig. 146, on the basis of mentioned SIB structure in Fig. 78, shows the options to attach blocks EM for the SIB structures shown in Fig. 78-81. Such structures, in the case of their limitation to two rows, in the EM can be placed in any type of vertical or horizontal scanning. In the case of configuring any of it multi-row, in the EM it can be placed as vertical scanning. Herewith the basis *bco*1 and *bco*2 can be attached to one side support, or to two separate side supports.

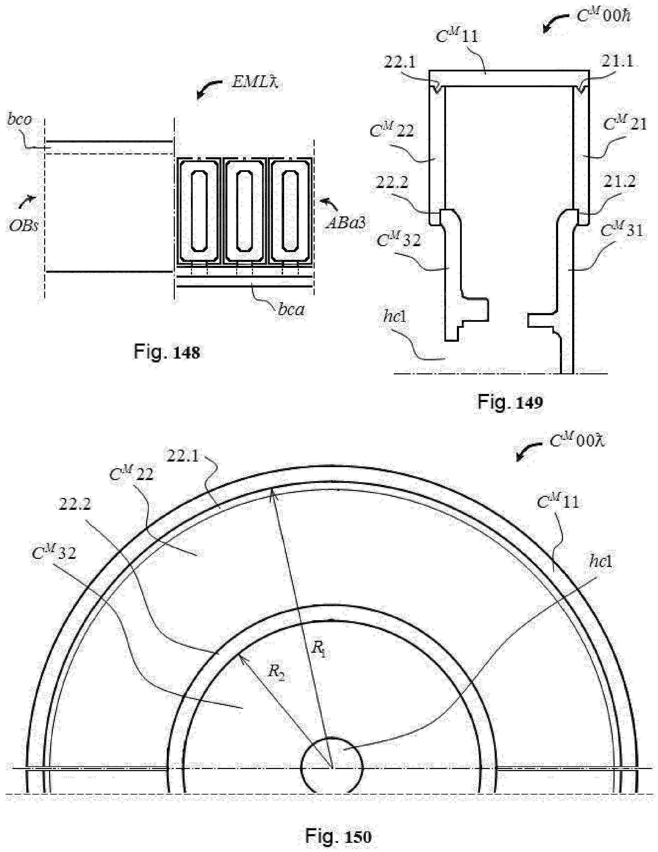

Fig. 147 and 148 show, in the projection on $\lambda$ -plane (lateral plane) of EM, respectively, the rotational EM in the form of *EMRh* $\lambda$ and linear EM in the form of *EML* $\lambda$.

*EMRh* $\lambda$ is made vertically-two-block and can serve as an example for building a vertically-multi-block EM. *EMRh* $\lambda$ includes: upper compartment of blocks, comprising a single-vector electromagnetic block *ABO* and placed at its two lateral sides, the lateral non-source blocks *OBs* ; lower compartment of blocks, comprises double-sided multiple-vector closed type electromagnetic block *ABu* and docked with it semicircle non-source block *OBu* . Intermediate platform *bco* is used for attachment, through the hubs, the non-source blocks *OBs* and *OBu* to the supporting central shaft or to the EM body. The intermediate platform *bca* serves for attachment of the electromagnetic blocks *ABO* and *ABu* to the support not occupied by the intermediate platform *bco.*

Linear EM in the form of *EML* $\lambda$ is performed as a vertically-single-block and it includes mentioned: double-sided multiple-vector open type electromagnetic block *ABu* and disposition at its two lateral sides, the lateral non-source *OBs* types of blocks, as well as inner non-source *OBa*3 block (not visible), which are attached to the intermediate platform *bco.* The intermediate platform *bca* can be attached to the supporting platform (base) of EM.

Fig. 149 shows in the projection on $\hbar$ - plane and on Fig.150 in the projection on $\lambda$ - plane one of options of performing the body for the rotary EMs. Fig. 149 and 150 show only one half of the rotationally symmetric image: the upper end side of the body, made in the form of two half-rings, only one half of $C^M$ 11 is shown; the upper lateral sides of the body, made in the form of four circular disk-shaped half-rings, only two of which are shown $C^M$ 21 and $C^M$ 22 ; two lower lateral sides of the body, one of which is made in the form of a circular disc-shaped half-ring (with a hole for the central shaft), only one its half is shown $C^M$ 32 and the other of which is made in a circular disc-shaped form, is shown only one half $C^M$ 31. Each of these components of the body may be performed separately and demountable from each other.

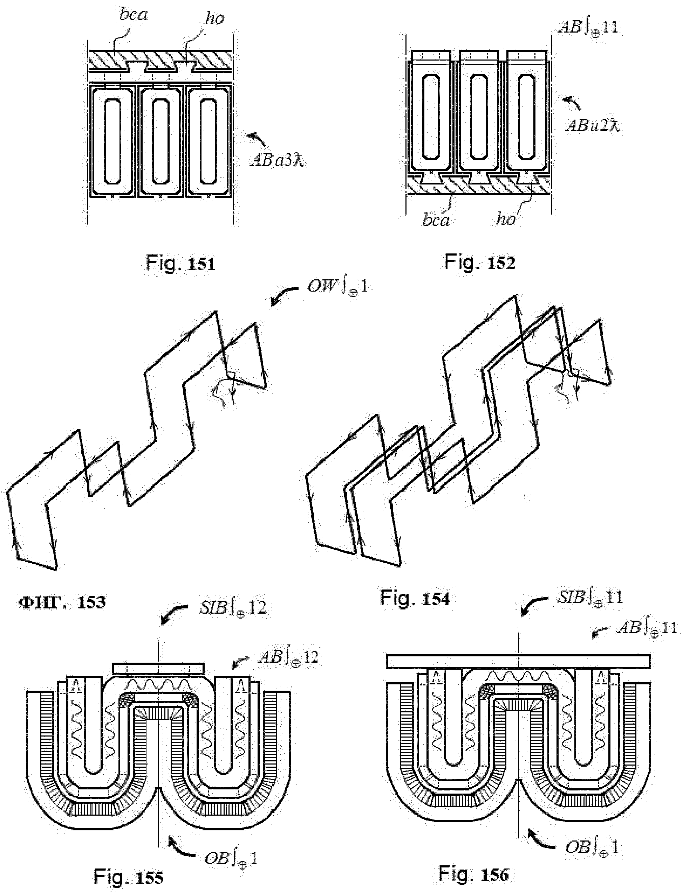

Fig. 151 and 152 show the performance of mechanical hook *ho* to the intermediate platform *bca,* respectively: for sector of an open type of electromagnetic block *ABa3* and in its composition of open type electromagnet *AMa3,* shown in projection on the $\lambda$ -plane in Fig. 126 *ABa3* $\lambda$; for sector of a closed type of electromagnetic block *ABu2* $\hbar$ and in its composition of closed type electromagnet *ABu,* shown in projection on the $\lambda$ -plane in Fig. 133 with curved shoes *ABu2* $\lambda$.

The principles of operation of any EM are well known, as mentioned, lay in motion relative to each other movable SSIB, and in production of electricity or mechanical motion.

**Claims**

**1.** A method of inductive interaction in the electric machine (EM), which comprises an outer body, a system of supports for different parts of the EM and system of inductive-interacting blocks (SIB), where the SIB is composed of at least two moving subsystems of inductive-interacting blocks (SSIB), each of which includes one or more induction blocks with internal structure, wherein at least one SSIB is electromagnetic subsystem of inductive-interacting blocks (SSAMB),comprising at least one electromagnetic induction block (AMB), wherein SSIB performs an inductive interaction between each other on the basis of at least one feature selected from the group (a) - (c):

(a) SIB performs multiple-vector inductive interaction on the basis of the use of at least one electromagnet, selected from the group consisting of the following: combination of at least two single-vector windings, which are configured with a core or without a core; symmetric or anti-symmetric multiple-vector winding, which are configured with a core or without a core;
(b) performs inductive interaction on the basis of the use of at least one kind of permanent magnets selected from the group consisting of the following kinds: closed-layered $P_G$ -type permanent magnet; symmetric or anti-symmetric multiple-vector permanent magnet;
(c) provides inductive interaction on the basis of the use of vertically multi-row SIB, which contains vertically more than one AMB.

**2.** The method of claim 1, ***characterized* in that** the inductive interaction is performed in it, wherein the sum of the forces acting perpendicular to the direction of movement of the moving part of SIB, particularly, of rotary EM hub, is zero.

**3.** The method of claim 1, ***characterized* in that** the optimization of curvilinear surface inductive interaction is performed in it.

**7.** The electric machine (EM), which comprises an outer body, a system of supports for different parts of the EM and system of inductive-interacting blocks (SIB), where the SIB is composed of at least two moving subsystems of inductive-interacting blocks (SSIB), each of which includes one or more induction blocks with internal structure, wherein at least one SSIB is electromagnetic subsystem of inductive-interacting blocks (SSAMB),comprising at least one electromagnetic induction block (AMB), wherein it has at least one feature selected from the group (a) - (c):

(a) its SIB is configured as multiple-vector and allowing multiple-vector inductive interaction between the SSIB and includes at least one electromagnet selected from the group consisting of the following: combination of some single-vector windings, which is configured with a core or without a core; symmetric or anti-symmetric multiple-vector winding, which is configured with a core or without a core;
(b) comprises at least one kind of permanent magnets selected from the group: closed-layered $P_G$ -type permanent magnet; symmetric or anti-symmetric multiple-vector permanent magnet;
(c) its SIB is configured vertically multi-row and on a vertical includes more than one AMB.

**8.** The machine according to claim 7, ***characterized* in that** it is configured in one of its kinds:

- linear EM with progressive type SIB or reciprocating type SIB;
- curvilinear EM with progressive type SIB or reciprocating type SIB;
- rotational EM with SIB selected from the group: of horizontal scanning; vertical scanning; mixed scanning.

**9.** The machine according to claim 8, ***characterized* in that** it is configured curvilinear with progressive type SIB or reciprocating type SIB, in which the moving part of SIB is configured with a hinge between its components and with possibility of moving in a curved shape, wherein a curved shape is corresponding a curvilinear surface of the fixed part of SIB.

**10.** The machine according to any of claims 8 and 9, ***characterized* in that** it comprises at least one **AMB,** which vertically-centered lines on the sides of electromagnetic windings are located at an angle $\alpha$ with respect to its base line, where this angle is limited within the $0 < \alpha < \pi$ range.

**11.** The machine according to any of claims 8-10, ***characterized* in** the view of the multiple-vector winding and multiple-vector magnet selected from the group consisting of the following kinds of shapes: one-sided multiple-vector $\Gamma$-**shaped;** symmetric two-sided ($\Lambda$ - shaped); anti-symmetric two-sided (A -shaped).

**12.** The machine according to claim 11, ***characterized* in that** in it the types of $\Lambda$ -shaped winding and multiple-vector magnet types are selected from the group consisting of the following kinds: parallel two-sided with the straight upper side; parallel two-sided with the semi-circle upper side; divergent two-sided with the straight upper side; divergent two-sided with the sectoral-circle upper side; sector of the second-order curve.

**13.** The machine according to claim 12, ***characterized* in that** in it for any kind of $\Lambda$ -shaped winding and multiple-vector magnet the ratio $\overset{\curvearrowright}{\lambda}$ is performed, where introduced are the parameter designations of $\Lambda$ -shaped form of curved winding and multiple-vector magnet: height $l1$ ; width $l2$ ; the distance between the lower transverse parts of the winding at its base $l3$.

**14.** The machine according to any of claims 11-13, ***characterized* in that** its multiple-vector electromagnet comprises a corresponding to multiple-vector armatures of the electromagnet, which belongs to the group of kinds of armatures: $\Gamma$ -shaped; open symmetric $\Lambda$ -shaped; closed symmetric $\Lambda$ -shaped; open anti-symmetric $\Lambda$ -shaped; closed anti-symmetric $\Lambda$ -shaped.

**15.** The machine according to claim 14, ***characterized* in that** in it the types of Λ -shaped armatures are selected from the group consisting of the following kinds: parallel two-sided with the straight upper side; parallel two-sided with the semi-circle upper side; divergent two-sided with the straight upper side; divergent two-sided with the sectoral-circle upper side; forms of a second-order curve.

**16.** The machine according to claim 15, ***characterized* in that** in it Λ -shaped closed type electromagnet is configured with flat or curved shoes.

**17.** The machine according to claim 15, ***characterized* in that** in it Λ -shaped open type electromagnet, as part of an open-type electromagnetic block, comprises an outer inter-magnetic bridge-bus configured from the side ends of the electromagnets.

**18.** The machine according to claim 16, ***characterized* in that** in it Λ -shaped closed type electromagnet, as part of a closed type electromagnetic block, comprises an internal inter-magnetic bridge-bus.

**19.** The machine according to any of claims 8-18, ***characterized* in that** the SIB block structure includes at least one of the blocks' fractions: basic; closed; z-integrated; x-integrated.

**20.** The machine according to claim 19, ***characterized* in that** the location of blocks in the SIB is configured in the form selected from the group: single-row structure, vertically double-row structure, vertically multi-row structure.

**21.** The machine according to any of claims 19 and 20, ***characterized* in that** in it the SIB blocks scan is configured in the form selected from the group: vertical, horizontal and mixed.

**22.** The machine according to any of claims 20 and 21, ***characterized* in that** in it the SIB is configured single-row, wherein, SIB block structure is configured in the form selected from the group of block fractions: basic, closed and z-integrated, which are located in the form of blocks' scan: horizontal, vertical, mixed.

**23.** The machine according to any of claims 20 and 21, ***characterized* in that** in it the SIB is configured vertically double-row, comprising the **out-of-energy** block (OEB), wherein the SIB block structure is configured in the form of block fractions: basic, closed, z-integrated, x -integrated, which are located inside the EM in the form of: vertical blocks scan for the rows containing non-side **OEBs;** in any of the types of blocks scans for the rows, one of which consists of side **OEBs**.

**24.** The machine according to any of claims 20 and 21, ***characterized* in that** in it the SIB is configured vertically multi-row (three rows or more), wherein the SIB block structure is configured from the fractions selected of the following kinds: basic, closed, z-integrated, x - integrated, which are located in horizontal blocks scan in the EM for the rows not containing non-side OEBs or containing non-side OEBs only on one of the extreme rows.

**25.** The machine according to any of claims 20-24, ***characterized* in that** in it, at the vertical scan of SIB blocks, at least one of its SSIB is configured with the side attachment to the body, with a horizontal SIB blocks scan one of its SSIB is configured with an upper end attachment, at the displaced SIB blocks scan one of its SSIB is configured partially with an upper end and partially with a side attachment.

**26.** The machine according to any of claims 20-25, ***characterized* in that** in it the SIB blocks are located as vertical scan, for the rows containing side or non-side **OEBs,** wherein the connection region of blocks to each other are attached to the main support of the EM.

**27.** The machine according to any of claims 20-26, ***characterized* in that** in it the SSIBs configured separately from each other are attached to one or to several different side supports.

**28.** The machine according to any of claims 8-27, ***characterized* in that** the winding material of the electromagnet is configured in the form selected from the following group of kinds: wire-wise; plate-wise; print-wise.

**29.** The machine according to claim 28, ***characterized* in that** the electromagnet winding is configured in the form selected from the group consisting of the following kinds: focused, semi-focused and dispersed:

**30.** The machine according to claim 29, ***characterized* in that** the electromagnets of each block are configured in the form of a single ensemble or in the form several ensembles that are selected from the group: single, binary, ternary.

**31.** The machine according to claim 30, **_characterized_ in that** the winding material of the electromagnet is configured of the wire/plate of a large section in order to minimize resistive losses.

**32.** The machine according to any of claims 28-31, **_characterized_ in that**, in the two-stream side winding socket, the currents' direction in both streams is configured in the form selected from the group: parallel, anti-parallel.

**33.** The machine according to any of claims 29-32, **_characterized_ in that** each of the ensembles of electromagnets is secured to its single base (bridge/bus) of magnetic-soft material.

**34.** The machine according to any of claims 8-33, **_characterized_ in that** in it the electromagnet is selected from the group, consisting of the following kinds: coreless with a flat winding (e.g. spiral-wise); coreless a bulk winding (e.g. **self-supporting** with quadrangular carcass framing); with a core of magnetic-soft material configured with a shoe or without a shoe; with a core of magnetic-soft material configured with one or more magnets on the shoe or on the cog; with a core of magnetic-soft material made of the magnet in the core kernel; with a core made of a permanent magnet.

**35.** The machine according to claim 34, **_characterized_ in that** the shoe of the core is made of magnetic-soft material.

**36.** The machine according to any of claims 33-35, **_characterized_ in that** the magnetic-soft material is performed selected from the group consisting of the following kinds: stamped and stowed large number of metal plates sheets; twisted metal plate; powdered magnetic-soft material (sintered ferromagnetic); composite material.

**37.** The machine according to any of claims 35 and 36, **_characterized_ in that** the shoe of the core is configured in a form of partially or completely removable from the cap of the core.

**38.** The machine according to claim 7, **_characterized_ in that** it is configured in the form of EMSSOEB with **out-of-energy** subsystem, wherein at least one of SSIB is configured in the form of **out-of-enegry** subsystem (SSOEB), and includes induction-inhomogeneous environment selected from the group comprising the following kinds: periodic protrusions and recesses (multi-cogged) made of magnetic-soft material; with co-directional and anti-directional permanent magnets of a periodic location on the surface, partially in the pocket or completely in the pocket of magnetic-soft material with air recesses or without recesses between the magnets.

**39.** The machine according to claim 38, **_characterized_ in that** it is configured with co-directional or anti-directional permanent magnets, wherein the OEB surface is configured in the form selected from a group: (a) periodically petal-shaped convex; (b) of a uniform height with periodic air recesses or without them; combination of (a) and (b).

**40.** The machine according to any of claims 38-39, **_characterized_ in that SSAMB** or SSOEB is fixed, in particular is attached to a fixed support.

**41.** The machine according to any if claim 40, **_characterized_ in that** in it the vertically-average lines of the sides of electromagnet windings to the direction of its relative movement with OEB forms an angle $\gamma$, which is limited within the $\pi < \gamma < 0$ range.

**42.** The machine according to any of claims 8-41, **_characterized_ in that** it comprises at least one **AMB,** in which the vertically-average lines of the sides of electromagnet windings relative to its base line is located at an angle $\alpha$, that is limited within the $0 < \alpha < \pi$ range, wherein vertically-average lines of the sides of electromagnet to the direction of its relative movement with OEB makes an angle $\gamma$, **which** is selected from: $\hbar$ and $\alpha = \gamma$.

**43.** The machine according to any of claims 38-42, **_characterized_ in that** in it vertically-average lines constituting the induction-inhomogeneous OEB environment to the direction of its relative movement with the **AMB** makes an angle $\alpha_\mu$, which is limited within the $0 < \alpha_\mu < \pi$ range.

**44.** The machine according to any of claims 38-43, **_characterized_ in that** in it the lines constituting inductively inhomogeneous OEB environment are curvilinear.

**45.** The machine according to any of claims 38-44, *characterized* **in that** the same inhomogeneities, in particular protrusions, of the two **OEBs,** located on both sides of **AMB** are shifted by a half period.

**46.** The machine according to any of claims 38-45, *characterized* **in that** it is configured to allow the equality to zero of the sum of the components of the induction interaction forces acting perpendicular to the direction of motion of the moving SIB part, such as rotational EM hub.

**47.** The machine according to any of claims 8-46, *characterized* **in that** in it each electromagnet is performed separately and into the block they are assembled in a single or in a composed of several parts **AMB** frame, and they are mechanically attached to at least one form selected from the following group: mechanical hook of electromagnets with the frame; packaging using packaging material such as resin.

**48.** The machine according to claim 47, *characterized* **in that** in it the mechanical hook of electromagnets with the frame for the open electromagnet type is configured from its upper end face, for the closed electromagnet type is configured from its lower end face.

**49.** The machine according to any of claims 8-48, *characterized* **in that** it is performed allowing the possibility of optimization of curvilinear surface inductive interaction and one of the SSIB (first) nearby the other SSIB (second) border are attached at an intermediate platform or support.

**50.** The machine according to claim 49, *characterized* **in that** it is configured linear and in it the intermediate platform is connected to the main support formed as a support platform.

**51.** The machine according to claim 49, *characterized* **in that** it is configured rotational and in it the intermediate platform, through one or more hubs, including the hollow cylinder, is connected to the main support formed as a central support shaft.

**52.** The machine according to claim 49, *characterized* **in that** its SIB is configured with vertical scanning, wherein one of the SSIB (first) near the other SSIB (second) border is attached to the side support, in the form of one or two sides of the EM body.

**53.** The machine according to claim 49, *characterized* **in that** its SIB is configured with horizontal scanning, wherein one of the SSIB (first) near the other SSIB (second) border is attached to the side support, in a form of top end side EM body.

**54.** The machine according to any of claims 8-48, *characterized* **in that** it is configured in a form of a plurality of EM, located along the axial direction.

**55.** The machine according to any of claims 8-54, *characterized* **in that** it comprises at least two **SSOEBs**, formed to allow the possibility to move, particularly to rotate in one of the following ways: independently from each other; co-directionally; in opposite directions.

**56.** The machine according to any of claims 8-55, *characterized* **in that** its body comprises two separable from each other departments - the department for the SIB and the department for the main support.

**57.** The machine according to claim 56, *characterized* **in that** in it the body departments for SIB include: separable from each other the upper end part $C^M 11$, and two sides $C^M 21$ and $C^M 22$.

**58.** The machine according to claim 56, *characterized* **in that** it is configured linear and its body department for the main support includes a substrate for the supporting platform $C^M 21$.

**59.** The machine according to claim 56, *characterized* **in that** it is configured rotational and its body department for the main support includes two separable from each other $C^M 31$ and $C^M 32$ sides of the body for the SIB, with a central hole in one or two sides of the body for the SIB for the accommodation of the central support shaft.

**60.** The machine according to any of claims 8-59, *characterized* **in that** its induction part has at least one of the types of cooling system: ventilation-air, closed-flowing liquid, closed-evaporating liquid.

$p\tau2$    OW.0

p1

$r1$   w1

w2

$\alpha_{\tau O}$

$P_{p1}$

$l$

$p\tau1$   Fig. 1

p2    OW.2

$p01$

OW.1   $p01$

$P_{p2}$

p1

p2   Fig. 2

$p\tau1$

$P_{p2}$

p1

$P_{p3}$

p2   Fig. 3

$p02$

OWh◊

z

x   y

Fig. 4

$bFOh$

ABO

$IFOh$

$pb2$

$\mu2$   OBs2

$zFOh$

OBs   $\mu$

$pb$

Fig. 5

OBs1   $\mu1$

$pb1$

Fig. 6

$ab11$

Fig. 7

SObRhh

$bFOh$

bca

$ab12$

SOIRhh

$IFOh$

bca

SOIRλh

$IFOh$

bca

$IFOh$

bco

Fig. 8a

bco3

Fig. 8b

$IFOh$

bco1

bco2

Fig. 8c

ΓWa.0

pτ3

w1

w2

p7

p8

x

z

y

p1

$\alpha_\tau$

p2

pτ1

**Fig. 9**

ΓWa.0

p4

p3

p1

p2

**Fig. 10b**

ΓWa.0

**Fig. 10a**

ΓWa.2

p01

20A

p01

ΓWa.1

x

z

y

x

z

y

pτ1

**Fig. 11**

p02

**Fig. 12**

Fig. 13

Fig. 14

Fig. 15

Fig. 16

Fig. 17

Fig. 18

Fig. 19

Fig. 20

Fig. 21

Fig. 22a

Fig. 22b

$OW\hbar$

Fig. 23

$\Gamma Wa\hbar$

Fig. 24

$\Lambda Wa\hbar$

Fig. 25

$\Lambda Wb\hbar$

Fig. 26

$\Lambda Wc\hbar$

Fig. 27

$\Lambda Wd\hbar$

Fig. 28

$\Lambda We\hbar$

Fig. 29

$\Lambda Wa\hbar$

Fig. 30

$OW\hbar\Diamond$

Fig. 31

$\Gamma Wa\hbar\Diamond$

Fig. 32

$\Lambda Wa\hbar\Diamond$

Fig. 33

$OW\omega$

Fig. 34

$\Gamma W\omega$

Fig. 35

$\Lambda W\omega$

Fig. 36

$jW\omega\lozenge$

Fig. 37

$OW\omega\lozenge$

Fig. 38

$\Gamma W\omega\lozenge$

Fig. 39

$\Lambda W\omega\lozenge$

Fig. 40

$OW\lambda$

$\alpha_{\tau O}$

Fig. 41

$\Gamma W\lambda$

$\alpha_{\tau}$

Fig. 42

$\Lambda W\lambda$

$\alpha_{\tau\lambda a}$

Fig. 43

$OW\lambda\lozenge$

$\alpha_{\tau O}$

Fig. 44

$\Gamma W\lambda\lozenge$

Fig. 45

$\Lambda W\lambda\lozenge$

$\alpha_{\tau\lambda a}$

Fig. 46

$P_{Ga}zx$

$hs\mu$  $h1\mu$

$l\mu$

Fig. 47a

$P_{Gb}zx$

$hs\mu$  $h1\mu$

$cs2$  $cs1$
$cs3$  $cs4$

$l\mu$

Fig. 47b

$P_{G}zy\lozenge$

S N
S N
S N

Fig. 48

$P_G zx \oplus$

**Fig. 49**

$P_G zy \oplus \Diamond$

**Fig. 50**

$P_G zx \ominus$

**Fig. 51**

$P_G zy \ominus \Diamond$

**Fig. 52**

$1P_G \hbar \oplus$

**Fig. 53**

$1P_G \hbar \oplus$

**Fig. 54**

$\Gamma P_G a \hbar \oplus$

**Fig. 55a**

$\Gamma P_G a \hbar \ominus$

**Fig. 55b**

$\Gamma P_G a_{\Sigma} \hbar \ominus$

**Fig. 55c**

$\Gamma P_C a_{\Sigma} \hbar \oplus$

**Fig. 55d**

$\Lambda P_G a \hbar \oplus$

**Fig. 56a**

$\Lambda P_G \bar{a} \hbar \ominus$

**Fig. 57a**

$\Lambda P_C \bar{a}_{\Sigma} \hbar \ominus$

**Fig. 58**

$bF\Gamma a\hbar$

$AB\Gamma a$

$OB\Gamma a$

**Fig. 59**

$bFas\hbar$

$ABu$

$OBs$

**Fig. 60**

$bFa2\hbar$

$ABa2$

$OBa2$

**Fig. 61**

$bFa3\hbar$

$ABa3$

$OBa3$

**Fig. 62**

Fig. 63

Fig. 64

Fig. 65

Fig. 66

Fig. 67

Fig. 68

Fig. 69

Fig. 70

Fig. 71

Fig. 72

Fig. 73

Fig. 74

Fig. 75

Fig. 76a

Fig. 76b

Fig. 77a

Fig. 77b

Fig. 78

Fig. 79

Fig. 80

Fig. 81

Fig. 82

Fig. 83

Fig. 84

Fig. 85

27

Fig. 86

Fig. 87

Fig. 88

Fig. 89

Fig. 90

Fig. 91

Fig. 92

Fig. 93

Fig. 94

Fig. 95

Fig. 96

Fig. 97

Fig. 98

Fig. 99

Fig. 100

Fig. 101

Fig. 102

Fig. 103

Fig. 104

Fig. 105

Fig. 106

Fig. 107

Fig. 108

Fig. 109

Fig. 110

Fig. 111

Fig. 112

Fig. 113

Fig. 114

Sωμ4

s0

μ̄10

102    Pμ10    101

**Fig. 115a**

Sωμ5

s2

μ̄21

si1    202    Pμ21    201

**Fig. 115b**

Sωμ6

s3

μ̄31

Pμ31

**Fig. 116**

Sωμ7

μ̄32

Pμ32

**Fig. 117**

Fig. 118

Fig. 119

Fig. 120

Fig. 121

Fig. 122

Fig. 123

Fig. 124

Fig. 125

Fig. 126

Fig. 127

Fig. 128

Fig. 129

Fig. 130

Fig. 131

Fig. 132

Fig. 133

Fig. 134

Fig. 135

Fig. 136

Fig. 137

Fig. 138

Fig. 139

*bca*  ⤹ 2*SOħ*

⤹ *IFOħ*

*bco*

Fig. 140

*bco2*  *bco1*  ⤹ 2*Sauħ*

⤹ *IFauħ*

*OEB2*  *OEB1*

*bca*

Fig. 141

*bca*  ⤹ 2*Sa3ħ*

⤹ *IFa3ħ*

*bco*

Fig. 142

⤹ *Sa312ħ*

*bco2*  *bco1*

*bca*

Fig. 143

⤹ *Sau22ħ*

*Sau12ħ*

*bca2*  *bca1*

*bco*

Fig. 144

*bco2*  *bco1*

*bco4*  *bco3*

*bca*

Fig. 145

*SuO12ħ*

*bco2*       *bco1*

*IFau*

**Fig. 146**       *bca*

*bca*       *EMRhλ*

*OBs*

*ABO*

*OBu*

*ABu*

*bco*       q

**Fig. 147**

Fig. 148

Fig. 149

Fig. 150

Fig. 151

Fig. 152

ФИГ. 153

Fig. 154

Fig. 155

Fig. 156

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8508094 B2
- US 8368273 B
- US 8013489 B2
- US 8310126 B1
- EP 2466725 A1
- US 7898134 B1
- US 20080088200 A1
- US 20060244320 A1
- US 8242661 B2
- US 20130147291 A1
- US 20130057091 A1
- US 20130249324 A1
- US 8587163 B2
- US 8593019 B2
- US 20090009010 A1
- US 8624446 B
- US 20130076159 A1
- US 8512590 B2
- US 8400038 B2
- EP 1829188 A1
- US 20130313923 A1